(19) Europäisches Patentamt
European Patent Office
Office européen des brevets

(11) EP 0 981 073 A2

(12) EUROPÄISCHE PATENTANMELDUNG

(43) Veröffentlichungstag:
**23.02.2000 Patentblatt 2000/08**

(21) Anmeldenummer: **99115745.4**

(22) Anmeldetag: **10.08.1999**

(51) Int. Cl.$^7$: **G03G 9/097**, C09D 5/03, H01G 7/02, C08J 11/06, B29B 17/02, B03C 7/00

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **19.08.1998 DE 19837522**

(71) Anmelder: **Clariant GmbH**
**65929 Frankfurt am Main (DE)**

(72) Erfinder:
- **Michel, Eduard, Dr.**
**60529 Frankfurt (DE)**
- **Baur, Rüdiger, Dr.**
**65817 Eppstein (DE)**
- **Macholdt, Hans-Tobias, Dr.**
**64297 Darmstadt (DE)**

# (54) Verwendung von Metall-Carboxylaten und -Sulfonaten als Ladungssteuermittel

(57) Metall-Carboxylate und -Sulfonate werden als Ladungssteuermittel in elektrophotographischen Tonern und Entwicklern, als Aufladungsverbesserer in Pulverlacken, Elektretmaterialien und in elektrostatischen Trennverfahren eingesetzt.

EP 0 981 073 A2

## Beschreibung

Die vorliegende Erfindung liegt auf dem technischen Gebiet der Ladungssteuermittel in Tonern und Entwicklern für elektrophotographische Aufzeichnungsverfahren, in Pulvern und Pulverlacken zur Oberflächenbeschichtung und in Elektretmaterialien, insbesondere in Elektretfasern, und in Trennvorgängen.

Bei elektrophotographischen Aufzeichnungsverfahren wird auf einem Photoleiter ein "latentes Ladungsbild" erzeugt. Dieses "latente Ladungsbild" wird durch Aufbringen eines elektrostatisch geladenen Toners entwickelt, der dann beispielsweise auf Papier, Textilien, Folien oder Kunststoff übertragen und beispielsweise mittels Druck, Strahlung, Hitze oder Lösungsmitteleinwirkung fixiert wird. Typische Toner sind Ein- oder Zweikomponentenpulvertoner (auch Ein- oder Zweikomponentenentwickler genannt), darüber hinaus sind noch Spezialtoner, wie z. B. Magnettoner, Flüssigtoner oder Polymerisationstoner im Einsatz. Unter Polymerisationstonern sind solche Toner zu verstehen, die z. B. durch Suspensionspolymerisation (Kondensation) oder Emulsionspolymerisation entstehen und zu verbesserten Teilcheneigenschaften des Toners führen. Weiterhin sind auch solche Toner gemeint, die grundsätzlich in nicht-wäßrigen Dispersionen erzeugt werden.

Ein Maß für die Tonerqualität ist seine spezifische Aufladung q/m (Ladung pro Masseeinheit). Neben Vorzeichen und Höhe der elektrostatischen Aufladung ist vor allem das schnelle Erreichen der gewünschten Ladungshöhe und die Konstanz dieser Ladung über einen längeren Aktivierzeitraum hinweg ein entscheidendes Qualitätskriterium. Darüber hinaus ist die Unempfindlichkeit des Toners gegen Klimaeinflüsse, wie Temperatur und Luftfeuchtigkeit, ein weiteres wichtiges Eignungskriterium.

Sowohl positiv als auch negativ aufladbare Toner finden Verwendung in Kopierern und Laserdruckern in Abhängigkeit vom Verfahrens- und Gerätetyp.

Um elektrophotographische Toner oder Entwickler mit entweder positiver oder negativer Aufladung zu erhalten, werden häufig Ladungssteuermittel zugesetzt. Da Tonerbindemittel in der Regel eine starke Abhängigkeit der Aufladung von der Aktivierzeit aufweisen, ist es Aufgabe eines Ladungssteuermittels, zum einen Vorzeichen und Höhe der Toneraufladung einzustellen und zum anderen der Aufladungsdrift des Tonerbindemittels entgegenzuwirken und für Konstanz der Toneraufladung zu sorgen.

Ladungssteuermittel, die nicht verhindern können, daß der Toner oder Entwickler bei längerer Gebrauchsdauer eine hohe Ladungsdrift zeigt (Alterung), die sogar bewirken kann, daß der Toner oder Entwickler eine Ladungsumkehr erfährt, sind daher für die Praxis ungeeignet.

Darüber hinaus ist für die Praxis wichtig, daß die Ladungssteuermittel eine ausreichende Thermostabilität und eine gute Dispergierbarkeit besitzen. Typische Einarbeitungstemperaturen für Ladungssteuermittel in die Tonerharze liegen bei Verwendung von Knetern oder Extrudern zwischen 100°C und 200°C. Dementsprechend ist eine Thermostabilität von 200°C von großem Vorteil. Wichtig ist auch, daß die Thermostabilität über einen längeren Zeitraum (ca. 30 Minuten) und in verschiedenen Bindemittelsystemen gewährleistet ist. Dies ist bedeutsam, da immer wieder auftretende Matrixeffekte zum frühzeitigen Zersetzen des Ladungssteuermittels im Tonerharz führen, wodurch eine dunkelgelbe oder dunkelbraune Färbung des Tonerharzes erfolgt und der Ladungssteuereffekt ganz oder teilweise verloren geht. Typische Tonerbindemittel sind Polymerisations-, Polyadditions- und Polykondensationsharze wie Styrol-, Styrolacrylat-, Styrolbutadien-, Acrylat-, Polyester-, Phenol-Epoxidharze, sowie Cycloolefincopolymere, einzeln oder in Kombination, die noch weitere Inhaltsstoffe, z. B. Farbmittel, wie Farbstoffe und Pigmente, Wachse oder Fließhilfsmittel, enthalten können oder im Nachhinein zugesetzt bekommen können, wie hochdisperse Kieselsäuren.

Außer in elektrophotographischen Tonern und Entwicklern können Ladungssteuermittel auch zur Verbesserung der elektrostatischen Aufladung von Pulvern und Lacken, insbesondere in triboelektrisch oder elektrokinetisch versprühten Pulverlacken, wie sie zur Oberflächenbeschichtung von Gegenständen aus beispielsweise Metall, Holz, Kunststoff, Glas, Keramik, Beton, Textilmaterial, Papier oder Kautschuk zur Anwendung kommen, eingesetzt werden. Die Pulverlacktechnologie kommt beispielsweise beim Lackieren von Gegenständen, wie Gartenmöbeln, Campingartikeln, Haushaltsgeräten, Fahrzeugteilen, Kühlschränken und Regalen, sowie beim Lackieren von kompliziert geformten Werkstücken zur Anwendung. Der Pulverlack oder das Pulver erhält seine elektrostatische Aufladung im allgemeinen nach einem der beiden folgenden Verfahren:

Beim Corona-Verfahren wird der Pulverlack oder das Pulver an einer geladenen Corona vorbeigeführt und hierbei aufgeladen, beim triboelektrischen oder elektrokinetischen Verfahren wird vom Prinzip der Reibungselektrizität Gebrauch gemacht.

Der Pulverlack oder das Pulver erhalten im Sprühgerät eine elektrostatische Aufladung, die der Ladung des Reibungspartners, im allgemeinen ein Schlauch oder Sprührohr, beispielsweise aus Polytetrafluorethylen, entgegengesetzt ist.

Auch eine Kombination von beiden Verfahren ist möglich. Als Pulverlackharze werden typischerweise Epoxidharze, carboxyl- und hydroxylgruppenhaltige Polyesterharze, Polyurethan- und Acrylharze zusammen mit den üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt.

Der Nachteil einer ungenügenden Aufladung ist vor allem bei triboelektrisch oder elektrokinetisch versprühten Pulvern und Pulverlacken, die auf Basis von Polyesterharzen, insbesondere carboxylgruppenhaltigen Polyestern, oder auf der Basis von sogenannten Mischpulvern, auch Hybridpulver genannt, hergestellt worden sind, zu beobachten. Unter Mischpulvern versteht man Pulverlacke, deren Harzbasis aus einer Kombination von Epoxidharz und carboxylgruppenhaltigem Polyesterharz besteht. Die Mischpulver bilden die Basis für die in der Praxis am häufigsten vertretenen Pulverlacke. Ungenügende Aufladung der oben genannten Pulver und Pulverlacke führt dazu, daß Abscheidequote und Umgriff am zu beschichtenden Werkstück ungenügend sind. Der Ausdruck "Umgriff" ist ein Maß dafür, inwieweit sich ein Pulver oder Pulverlack am zu beschichtenden Werkstück auch an Rückseiten, Hohlräumen, Spalten und vor allem an Innenkanten und -ecken abscheidet.

Darüber hinaus ist gefunden worden, daß Ladungssteuermittel das Aufladungs- sowie das Ladungsstabilitätsverhalten von Elektretmaterialien, insbesondere Elektretfasern, erheblich verbessern können (DE-A-43 21 289). Elektretfasern sind bisher hauptsächlich im Zusammenhang mit dem Problem der Feinststaubfiltration beschrieben worden. Die beschriebenen Filtermaterialien unterscheiden sich sowohl hinsichtlich der Materialien, aus denen die Fasern bestehen als auch bezüglich der Art und Weise, wie die elektrostatische Ladung auf die Fasern aufgebracht wird. Typische Elektretmaterialien basieren auf Polyolefinen, halogenierten Polyolefinen, Polyacrylaten, Polyacrylnitrilen, Polystyrolen oder Fluorpolymeren, wie beispielsweise Polyethylen, Polypropylen, Polytetrafluorethylen und perfluoriertes Ethylen und Propylen, oder auf Polyestern, Polycarbonaten, Polyamiden, Polyimiden, Polyetherketonen, auf Polyarylensulfiden, insbesondere Polyphenylensulfiden, auf Polyacetalen, Celluloseestern, Polyalkylenterephthalaten sowie Mischungen daraus. Elektretmaterialien, insbesondere Elektretfasern, können beispielsweise zur (Feinst-)Staubfiltration eingesetzt werden. Die Elektretmaterialien können ihre Ladung auf unterschiedliche Weise erhalten, nämlich durch Corona- oder Triboaufladung.

Weiterhin ist bekannt, daß Ladungssteuermittel in elektrostatischen Trennvorgängen, insbesondere in Trennvorgängen von Polymeren verwendet werden können. So beschreiben Y. Higashiyama et al. (J. Electrostatics 30, pp 203 - 212 (1993)) am Beispiel des äußerlich aufgebrachten Ladungssteuermittels Trimethyt-phenyl-ammonium-tetraphenylborat, wie Polymere für Recyclingzwecke voneinander getrennt werden können. Ohne Ladungssteuermittel laden sich "Low Density Polyethylen (LDPE)" und "High Density Polyethylen" (HDPE) reibungselektrisch weitestgehend ähnlich auf. Nach Ladungssteuermittelzugabe laden sich LDPE stark positiv und HDPE stark negativ auf und lassen sich so gut trennen. Neben der äußerlichen Aufbringung der Ladungssteuermittel kann auch grundsätzlich an eine Einarbeitung derselben in das Polymer gedacht werden, um beispielsweise ein Polymer innerhalb der triboelektrischen Spannungsreihe zu verschieben und eine entsprechende Trennwirkung zu erhalten. Ebenso lassen sich auf diese Weise andere Polymere wie z. B. Polypropylen (PP) und/oder Polyethylenterephthalat (PET) und/oder Polyvinylchlorid (PVC) voneinander trennen.

Ebenso lassen sich auch z. B. Salzmineralien besonders gut selektiv trennen, wenn ihnen zuvor ein Oberflächenzusatz zugegeben wurde (Oberflächenkonditionierung), der die substratspezifische elektrostatische Aufladung verbessert (A. Singewald, L. Ernst, Zeitschrift für Physikal. Chem. Neue Folge, Bd. 124, S. 223 - 248 (1981).

Weiterhin werden Ladungssteuermittel als "Electroconductivity Providing Agents" (ECPA) (JP 05 163 449-A) in Tinten für Tintenstrahldrucker eingesetzt.

Ladungssteuermittel sind in der Literatur zahlreich bekannt. Allerdings weisen die bisher bekannten Ladungssteuermittel eine Reihe von Nachteilen auf, die den Einsatz in der Praxis stark einschränken oder gar unmöglich machen, wie z. B. ungenügende Thermostabilität, Eigengeruch, schlechte Dispergierbarkeit oder geringe Stabilität im Tonerbindemittel (Zersetzung, Migration). Eine besondere Schwäche vieler marktgängiger Ladungssteuermittel ist die ungenügende Wirksamkeit hinsichtlich des gewünschten Vorzeichens der Ladung (positive oder negative Aufladung), Ladungshöhe oder Ladungskonstanz.

Ein wichtiger Aspekt ist auch, daß Ladungssteuermittel ökotoxikologisch unbedenklich sein müssen.

Aufgabe der vorliegenden Erfindung war es daher, besonders wirksame und ökotoxikologisch verträgliche Ladungssteuermittel zu finden. Neben dem schnellen Erreichen und der Konstanz der Aufladung sollen die Verbindungen eine hohe Thermostabilität aufweisen. Weiterhin sollten sie in verschiedenen praxisnahen Tonerbindemitteln wie Polyestern, Polystyrolacrylaten oder Polystyrolbutadienen/Epoxidharzen sowie Cycloolefincopolymeren gut und unzersetzt dispergierbar sein. Weiterhin sollte ihre Wirkung weitgehend unabhängig von der Harz/Carrier-Kombination sein, um eine breite Anwendung zu erschließen. Ebenso sollten sie in gängigen Pulverlack-Bindemitteln und Elektretmaterialien wie z. B. Polyester (PES), Epoxid, PES-Epoxyhybrid, Polyurethan, Acrylsystemen sowie Polypropylenen gut und unzersetzt dispergierbar sein.

Bezüglich ihrer elektrostatischen Effizienz sollten die Ladungssteuermittel bereits bei möglichst geringer Konzentration (1 % oder kleiner) wirksam sein und diese Effizienz in Verbindung mit Ruß oder anderen Farbmitteln nicht verlieren. Von Farbmitteln ist nämlich bekannt, daß sie die triboelektrische Aufladung von Tonern teilweise nachhaltig beeinflussen können.

Ein negativ geladener Toner bestehend aus Tonerharz, Farbmittel und einem metallhaltigen Additiv zur Ladungsverbesserung, erhältlich aus der Reaktion eines Metallions mit einem Moläquivalent eines Ortho-Hydroxyphenols und zwei Moläquivalenten einer aromatischen Carbonsäure in wäßriger Lösung bei Anwesenheit einer Base, wird beschrieben im US-Patent US 5,571,654.

Ein Toner, bestehend aus Harz, Pigment und einer Dreier-Mischung als Ladungsadditiv, in dem die Seitenkette einer aromatischen Carboxylverbindung eine Alkoxygruppe darstellt, wird in US-Patent 5,484,678 beschrieben. Schließlich wird ein negativ geladener Toner, bestehend aus Harzpartikeln, Pigmentpartikeln und einem Additiv zur Ladungsverbesserung, erhältlich aus der Reaktion einer anorganischen Aluminium-Salzlösung und einer Alkoxy-substituierten Benzoesäure, in US-Patent 5,346,793 beschrieben.

Überraschenderweise hat sich nun gezeigt, daß nachstehend definierte Metall-Carboxylate und -Sulfonate gute Ladungssteuereigenschaften, insbesondere für negative Aufladungen und hohe Thermostabilität besitzen, wobei die Ladungssteuereigenschaft weder durch Kombination mit Ruß oder anderen Farbmitteln verloren geht. Darüber hinaus sind die Verbindungen mit den üblichen Toner-, Pulverlack- und Elektretbindemitteln gut verträglich und lassen sich leicht dispergieren.

Gegenstand der vorliegenden Erfindung ist die Verwendung von Metall-Carboxylaten und Metall-Sulfonaten als Ladungssteuermittel in elektrophotographischen Tonern und Entwicklern, als Aufladungsverbesserer in Pulverlakken, Elektretmaterialien und in elektrostatischen Trennverfahren, wobei die Metall-Carboxylate und -Sulfonate durch Umsetzung einer Säure $A^1$ und einer Säure $A^2$ in wäßrigem alkalischem Medium, oder eines Alkalisalzes der Säure $A^1$ und der Säure $A^2$, mit einem wasserlöslichen Metall-Salz hergestellt werden, dadurch gekennzeichnet, daß $A^1$

a) eine Säure der Formeln (I) bis (VIII)

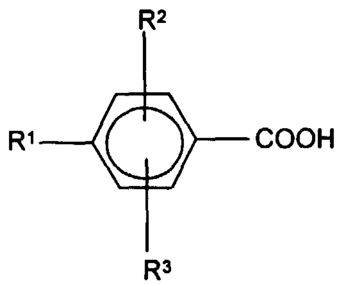

(I)

worin

$R^1$ ein linearer oder verzweigter Alkylrest mit 1 bis 18 C-Atomen,

$R^2$ und $R^3$ gleich oder verschieden sind und Wasserstoff, $C_1$-$C_8$-Alkyl, ($C_1$-$C_{18}$)-Hydroxyalkylen, $C_6$-$C_{10}$-Aryl, Heteroaryl, z.B. Pyridyl, Imidazolyl, Pyrazolyl, Chinolinyl, Isochinolinyl, Benzimidazolyl, Indolyl, wobei Aryl und Heteroaryl durch 1 bis 3 der Reste Carboxyl, Hydroxy, $C_1$-$C_4$-Alkoxy, $C_1$-$C_4$-Alkyl, $C_1$-$C_4$-Acyl, Halogen, Hydroxy-($C_1$-$C_4$)-alkyl oder Amino substituiert sein können, Nitro, Cyano, Fluor, Chlor, Brom oder $C_1$-$C_4$-Acyl;

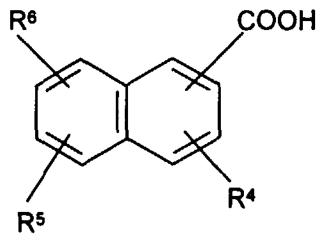

(II)

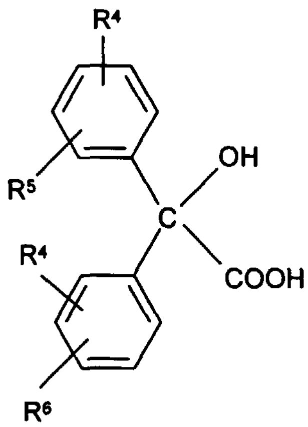

(III)

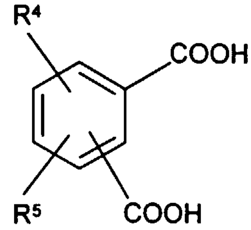

(IV)

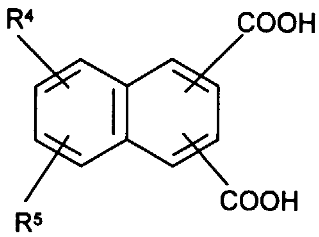

(V)

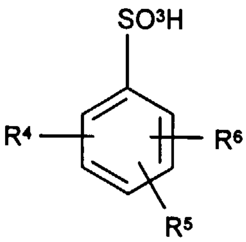

(VI)

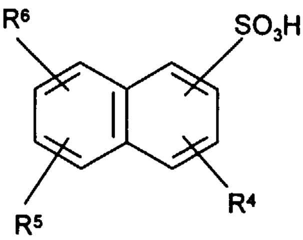

(VII)

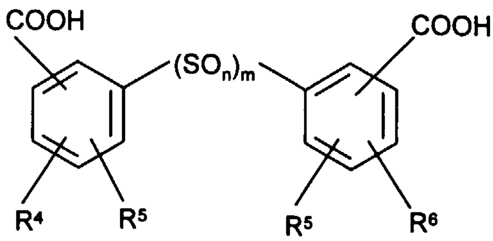

(VIII)

worin

$R^4$, $R^5$ und $R^6$ gleich oder verschieden sind und Wasserstoff, $C_1$-$C_8$-Alkyl, ($C_1$-$C_{18}$)-Hydroxyalkylen, $C_6$-$C_{10}$-Aryl, Heteroaryl, z.B. Pyridyl, Imidazolyl, Chinolinyl, Isochinolinyl, Benzimidazolyl, wobei Aryl und

Heteroaryl durch 1 bis 3 der Reste Carboxyl, Hydroxy, $C_1$-$C_4$-Alkoxy, $C_1$-$C_4$-Alkyl, Halogen, Hydroxy-($C_1$-$C_4$)-alkyl oder Amino substituiert sein können, Nitro, Cyano, Fluor, Chlor, Brom oder $C_1$-$C_4$-Acyl;

m die Zahl 1, 2 oder 3, und

n die Zahl 0, 1 oder 2 ist;

b) eine heteroaromatische Mono- oder Dicarbonsäure;

c) eine Polyanionen bildende Verbindung aus der Gruppe Poly(styrolsulfonsäure), Poly(acrylsäure), Poly(methacrylsäure), Poly(maleinsäure), Poly(anetholsulfonsäure), Poly(itaconsäure), Poly(vinylsulfat), Poly(vinylsulfonsäure), Poly(acrylsäure-co-maleinsäure), Poly(styrolsulfonsäure-co-maleinsäure), Poly(ethylen-co-acrylsäure), Hectorit, Bentonit, Alginsäure, Pektinsäure, kappa-, lambda-, iota-Carrageenane, Xanthan, Gummi arabicum, Dextransulfat, Carboxymethyldextran, Carboxymethyl-cellulose, Cellulosesulfat, Stärkesulfat, Lignosulfonate, Gummi Karaya; Polygalakturonsäure, Polyglucuronsäure, Polyguluronsäure, Polymannuronsäure und Mischpolymere hiervon, Chondroitin-Sulfat, Heparin, Heparansulfat, Hyaluronsäure, Dermatansulfat, Keratansulfat; Stärke-, Amylose-, Amylopektin-, Cellulose-, Guaran-, Gummi arabicum-, Gummi Karaya-, Gummi Guar-, Pullulan-, Xanthan-, Dextran-, Curdlan-, Gellan-, Carubin-, Agarose-, Chitin-, Chitosan-Derivate mit folgenden funktionellen Gruppen in verschiedenen Substitutionsgraden:

Carboxymethyl- und Carboxyethyl-, Carboxypropyl-, 2-Carboxyvinyl-, 2-Hydroxy-3-carboxypropyl-, 1,3-Dicarboxy-isopropyl-, Sulfomethyl-, 2-Sulfoethyl-, 3-Sulfopropyl-, 4-Sulfobutyl-, 5-Sulfopentyl-, 2-Hydroxy-3-sulfopropyl-, 2,2-Disulfoethyl-, 2-Carboxy-2-sulfo-ethyl-, Maleat-, Succinat-, Phthalat-, Glutarat-, aromatische und aliphatische Dicarboxylate-, Xanthogenat-, Sulfat-, Phosphat-, 2,3-Dicarboxy-, N,N-Di-(phosphatomethyl)-aminoethyl-, N-Alkyl-N-phosphatomethyl-aminoethyl, wobei diese Derivate auch nichtionische funktionelle Gruppen in verschiedenen Substitutionsgraden enthalten können, wie z. B. Methyl-, Ethyl-, Propyl-, Isopropyl-, 2-Hydroxyethyl-, 2-Hydroxypropyl-, 2-Hydroxybutyl-Gruppen sowie Ester mit aliphatischen Carbonsäuren ($C_2$ bis $C_{18}$)

sowie der Formel (X)

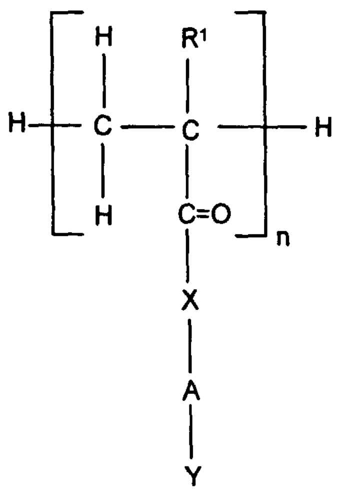

(X)

wobei n = 5 bis $5x10^5$; und $R^1$, X, A und Y jeweils gleiche oder verschiedene der nachstehend genannten Bedeutungen haben:

$R^1$ = H oder $CH_3$;
X = O oder NH;
A = verzweigte oder lineare ($C_1$-$C_{18}$)-Alkylene oder Arylene, z.B. Phenylen oder Naphthylen;
Y = $SO_3$, COO, $N^{\oplus}R^3_2$-A-COO, $N^{\oplus}R^3_2$-A-$SO_3^{\ominus}$, $N^{\oplus}R^3_2$-A-PO(OH)$O^{\ominus}$ mit $R^3$ =
$C_1$-$C_8$-Alkyl;

sowie Copolymere, bestehend aus Monomeren der vorstehend genannten Verbindungen und einem oder mehreren der nachfolgenden Monomere in unterschiedlicher Zusammensetzung: Acrylsäure, Methacrylsäure,

Acrylsäurealkyl-($C_1$-$C_{18}$)-ester, Methacrylsäurealkyl($C_1$-$C_{18}$)ester, Methacrylsäureglycidylester, Acrylsäureamid, Acrylnitril, Methacrylnitril, Ethylen, Styrol, $\alpha$-Methylstyrol, Styrolsulfonsäure, Butadien, Buten, Isopren, Vinylchlorid, Propylen, Maleinsäureanhydrid, Maleinsäure, Maleinsäuremonoalkyl($C_1$-$C_{18}$)- oder -dialkyl($C_1$-$C_{18}$)ester, Alkyl($C_1$-$C_{18}$)-vinylether, Vinylalkohol, Vinylacetat, Vinylbutyral, Vinylimidazol, N-Vinyl-2-caprolactam, N-Vinylpyrrolidon, mono- oder di-alkyliertes ($C_1$-$C_{30}$)-N-Vinylpyrrolidon,Vinylsulfonsäure, Diallyldimethylammoniumchlorid, Vinylidenchlorid, Poly(ethylenglykol)-methacrylat, Poly(ethylenglykol)-acrylat;

d) ein carboxyl- und/oder sulfogruppenhaltiger Polyester;

$A^2$ eine Säure der Formeln (I) bis (VIII);
eine Säure der Formel (IX)

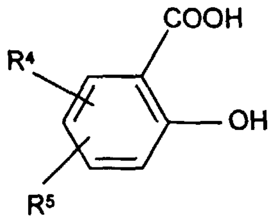

(IX)

worin $R^4$ und $R^5$ die vorstehend genannten Bedeutungen haben; oder eine heteroaromatische Mono- oder Dicarbonsäure;

oder durch Umsetzung einer Säure $A^1$ der in c) oder d) genannten Bedeutung mit einer Säure $A^2$ in der Bedeutung der Formeln (I) bis (IX) hergestellt werden, worin $R^1$ bis $R^6$ die vorstehend genannten Bedeutungen und zusätzlich die Bedeutung
($C_1$-$C_{18}$)-Alkoxy, Hydroxy, Amino, ($C_1$-$C_{18}$)Alkylamino, Di($C_1$-$C_{18}$)Alkylamino, ($C_1$-$C_{18}$)Alkylen-$NR^7R^8$, worin $R^7$ und $R^8$ Wasserstoff oder $C_1$-$C_8$-Alkyl bedeuten, haben;
und das dem Metall zugrundeliegende Kation zweiwertig oder dreiwertig ist.

Die Herstellung der Metall-Carboxylate und -Sulfonate in wäßrig alkalischem Medium wird zweckmäßigerweise bei einer Temperatur zwischen 0 und 100°C, vorzugsweise zwischen 10 und 90°C, insbesondere zwischen 15 und 85°C, vorgenommen, gegebenenfalls auch unter Druck.
Im Falle eines zweiwertigen Metalls sind die eingesetzten Säuren $A^1$ und $A^2$ ungleich.
Das wasserlösliche Metallsalz, die Säure $A^1$ und die Säure $A^2$ werden zweckmäßigerweise jeweils in etwa equimolaren Mengen eingesetzt, wobei bei den Säuren Abweichungen von jeweils bis zu 90 Mol-% auftreten können. Das wasserlösliche Metallsalz kann aber auch in einem Überschuß zugesetzt werden, z.B. in einem 1,1 bis 6-fachen molaren Überschuß je Carboxylat- oder Sulfonat-Rest.
Es können Verbindungen der Formel (1)

$$A^{10} - M^2 - A^{20} \qquad (1)$$

wobei

$M^2$ des zweiwertige Metall,
$A^{10}$ der Säurerest der Säure $A^1$ und
$A^{20}$ der Säurerest der Säure $A^2$ ist

entstehen, oder es entsteht ausschließlich oder teilweise eine Mischung der Verbindungen der Formel $A^{10}$-$M^2$-$A^{10}$ und $A^{20}$-$M^2$-$A^{20}$.

Im Falle eines dreiwertigen Metalls können das wasserlösliche Metallsalz, die Säure $A^1$ und die Säure $A^2$ in ebensolchen Mengenverhältnissen eingesetzt werden, wie vorstehend für zweiwertige Metalle beschrieben. In diesem Fall ist der dritte Ligand des dreiwertigen Metalls eine Hydroxygruppe.
Hierbei können die eingesetzten Säuren $A^1$ und $A^2$ gleich oder ungleich sein, und es können Verbindungen der Formel (2) entstehen,

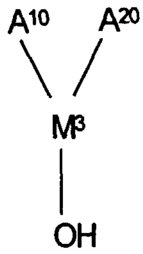

(2)

mit

$A^{10}$ = Säurerest der Säure $A^1$,
$A^{20}$ = Säurerest der Säure $A^2$ und
$M^3$ = dreiwertiges Metall.

Sind die eingesetzten Säuren $A^1$ und $A^2$ gleich, so ist $A^{10} = A^{20}$.

Sind die eingesetzten Säuren $A^1$ und $A^2$ ungleich, so können Verbindungen der Formel (2) mit entsprechend ungleichen Säureresten $A^{10}$ und $A^{20}$ entstehen. Es ist jedoch auch möglich, daß teilweise oder ausschließlich eine Mischung der Verbindungen $(A^{10})_2M^3OH$ und $(A^{20})_2M^3OH$ entsteht.

Im Falle eines dreiwertigen Metalls ist es aber auch möglich, die Säuren $A^1$ und $A^2$ sowie das Metallsalz im molaren Verhältnis von etwa 2:1:1 oder 1:2:1 einzusetzen, wobei bei den Säuren untereinander Abweichungen von jeweils bis zu 90 Mol-% auftreten können. In diesem Fall kann auch der dritte Ligand des dreiwertigen Metalls ein Säurerest der Säure $A^1$ oder $A^2$ sein. Auch hier kann das wasserlösliche Metallsalz in einem beispielsweise 1,1 bis 6-fachen molaren Überschuß je Carboxylat- oder Sulfonat-Gruppe eingesetzt werden. Auch hier ist es möglich, daß ein Gemisch aus zwei oder mehreren der Verbindungen $(A^{10})_3M^3$, $(A^{10})_2(A^{20})M^3$, $(A^{20})_2(A^{10})M^3$ und $(A^{20})_3M^3$ entsteht, wenn eine solche Mischung schneller aus der wäßrigen Lösung ausfällt als die Verbindung der Formel (2a)

$$A^{10}A^{20}A^{30}M^3 \qquad (2a)$$

mit $A^{30}$ = Säurerest $A^{10}$ oder $A^{20}$.

Insbesondere wenn das alkalische Medium, z.B. die Natronlauge, im Überschuß eingesetzt wird, so können in der besagten Mischung Säurereste durch OH ersetzt sein.

Bevorzugte Metall-Kationen $M^{2+}$ sind $Zn^{2+}$, $Fe^{2+}$, $Co^{2+}$, $Mn^{2+}$, $Ni^{2+}$, $Cu^{2+}$, $Mg^{2+}$, $Ca^{2+}$,$Sr^{2+}$ und $Ba^{2+}$. Bevorzugte Metall-Kationen $M^{3+}$ sind $Al^{3+}$, $Fe^{3+}$, $Mn^{3+}$ und $Co^{3+}$.

Als wasserlösliche Metallsalze werden vorzugsweise Salze der genannten Kationen mit Anionen aus der Gruppe Fluorid, Chlorid, Bromid, Sulfat, Hydrogensulfat, Carbonat, Hydrogencarbonat, Nitrat und Hydroxid eingesetzt, mit denen eine ausreichende Wasserlöslichkeit in alkalischer Lösung besteht. Der pH-Wert der alkalischen Lösung wird mit einem Metallhydroxid $M^1OH$, $M^2(OH)_2$ oder $M^3(OH)_3$, vorzugsweise mit NaOH, auf 7,5 bis 13 eingestellt. Es ist auch möglich, die oben beschriebenen Metallkationen direkt in Form ihrer Hydroxide einzusetzen.

Zweckmäßigerweise wird so verfahren, daß die Säure $A^1$ und $A^2$ in Wasser aufgeschlämmt, der besagte pH mit NaOH eingestellt und eine Lösung des wasserlöslichen Metallsalzes zudosiert wird. Das gewünschte Produkt fällt meist als Niederschlag aus und wird isoliert und getrocknet.

Bevorzugte Säuren $A^1$ im Sinne der vorliegenden Erfindung sind

a)

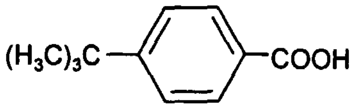 , 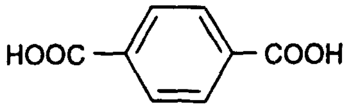 , 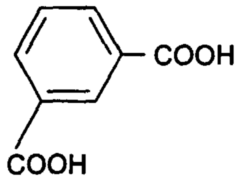 ,

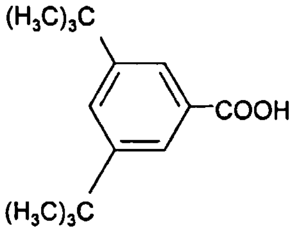 , 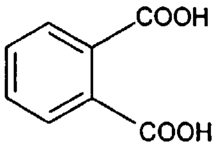 , 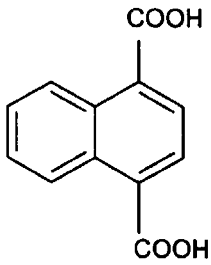 ,

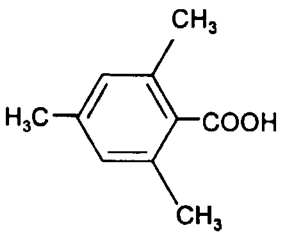 , 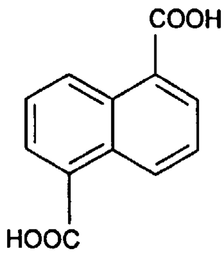 , 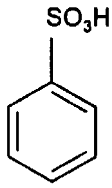 , 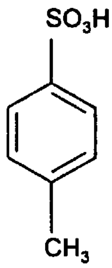 ,

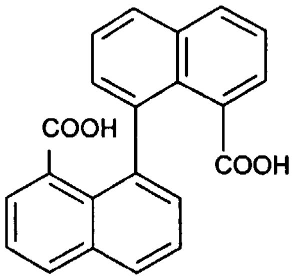 , 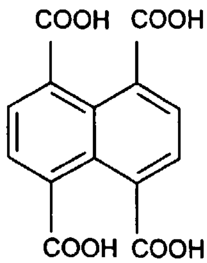 , 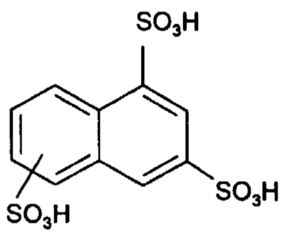 ,

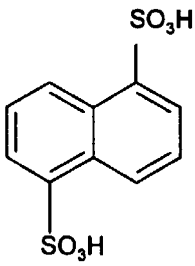 , 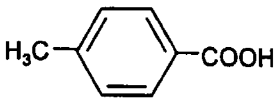 , 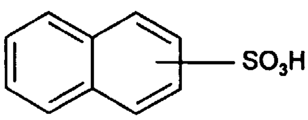 ,

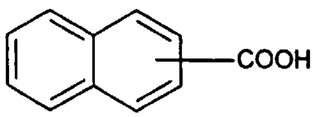 , 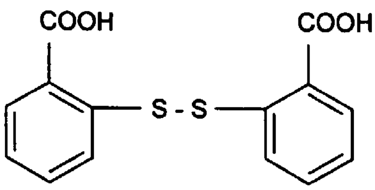 ,

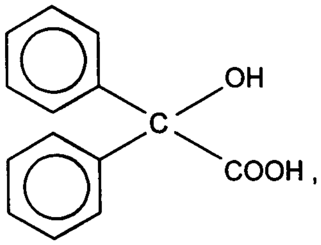

b)

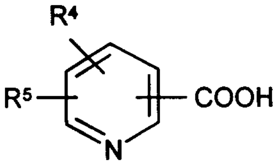 , 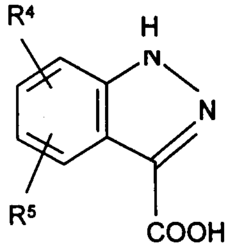 , 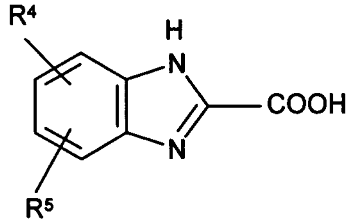 ,

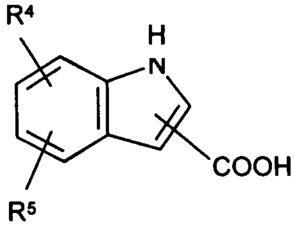 , 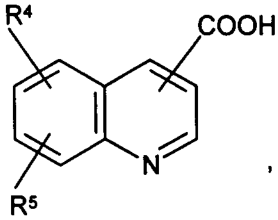 , 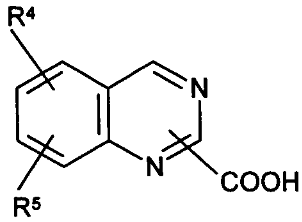 ,

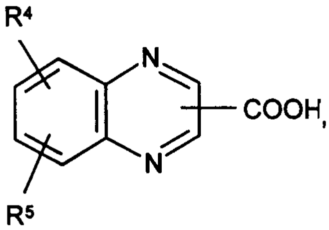 , 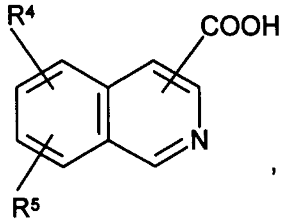 , 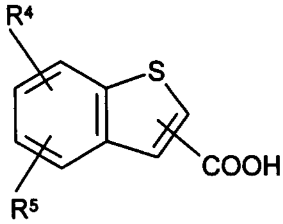 ,

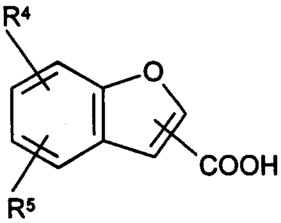 , 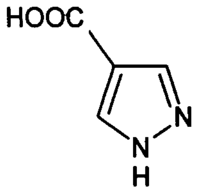 , 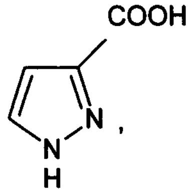 , 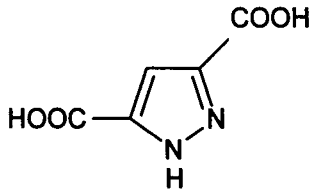

c) Poly(methacrylsäure), Poly(styrolsulfonsäure), Poly(ethylensulfonsäure), Poly(styrolsulfonsäure-co-maleinsäure 1:1),

d) Polyester, der aus dem Reaktionsprodukt der einzelnen Komponenten i), ii) und iii) sowie gegebenenfalls iv) und gegebenenfalls v) besteht, wobei

i) eine Dicarbonsäure oder ein reaktives Derivat einer Dicarbonsäure, welche frei von Sulfogruppen sind,
ii) eine difunktionelle aromatische, aliphatische oder cycloaliphatische Sulfoverbindung, deren funktionelle Gruppen Hydroxyl oder Carboxyl, oder Hydroxyl und Carboxyl, sind,
iii) ein aliphatisches, cycloaliphatisches oder aromatisches Diol, ein Polyetherdiol oder ein Polycarbonatdiol,

iv) eine polyfunktionelle Verbindung (Funktionalität > 2), deren funktionelle Gruppen Hydroxyl oder Carboxyl oder Hydroxyl und Carboxyl, sind und

v) eine Monocarbonsäure oder ein sulfogruppenhaltiger Monoalkohol ist.

Besonders bevorzugte Säuren $A^1$ aus den Gruppen a) bis d) sind:

a)

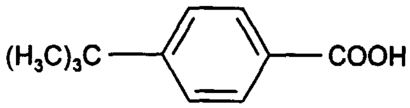
,
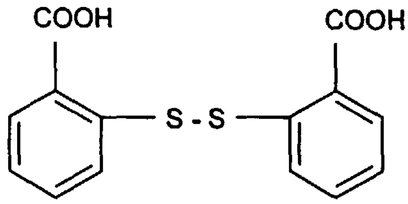
;

b)

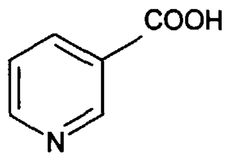
,
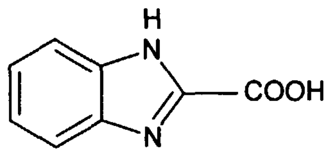
,

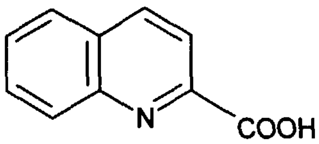
,
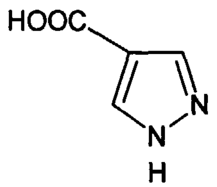
;

c) Poly(methacrylsäure), Poly(styrolsulfonsäure), Poly(styrolsulfonsäure-co-maleinsäure 1:1);

d) ein Polyester aus Dimethyl-5-sulfoisophthalsäure, Terephthalsäure, Isophthalsäure und Neopentylglykol, Propylenglykol und Ethylenglykol;

ein Polyester aus 5-Sulfoisophthalsäure, Terephthalsäure, Isophthalsäure und Neopentylglykol, Trimethylolpropan und Ethylenglykol;
ein Polyester aus 5-Sulfoisophthalsäure, Terephthalsäure, Isophthalsäure, Cyclohexan-1,3-dicarbonsäure und Neopentylglykol und Ethylenglykol
sowie
ein Polyester aus 5-Sulfoisophthalsäure, Terephthalsäure, Isophthalsäure, Cyclohexan-1,3-dicarbonsäure und Ethylenglykol, Propylenglykol und Isethionsäure.

Bevorzugte Säuren $A^2$ im Sinne der vorliegenden Erfindung sind

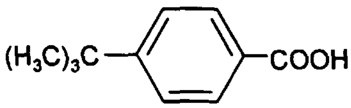 , 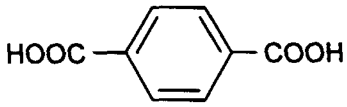 , 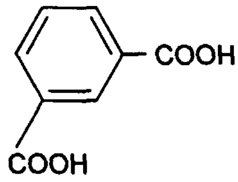 ,

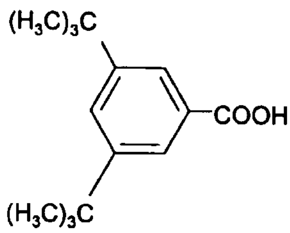 , 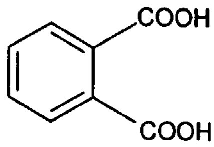 , 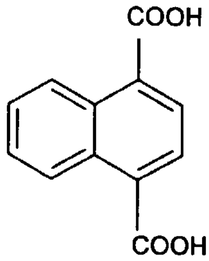 ,

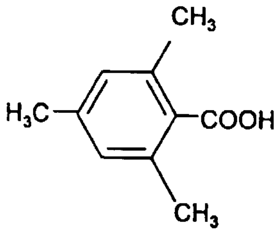 , 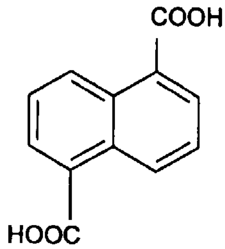 , 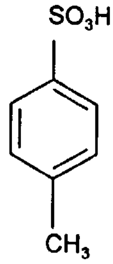 , 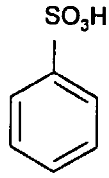 ,

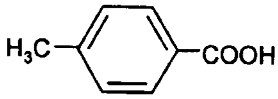 , 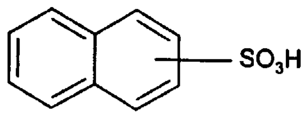 , 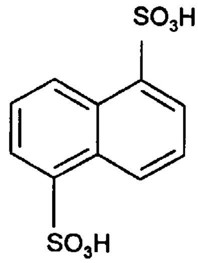 ,

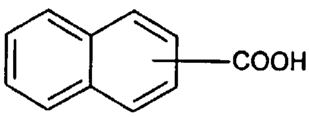 , 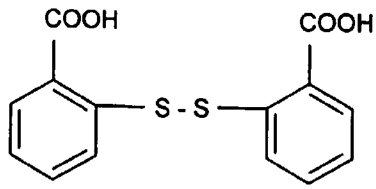 ,

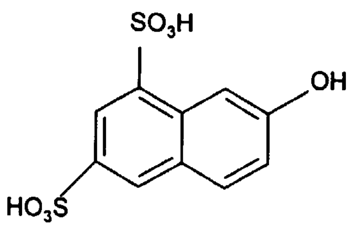 , 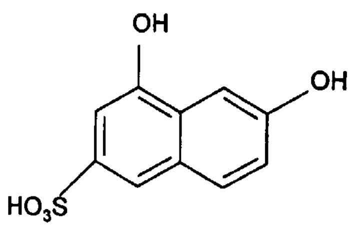 ,

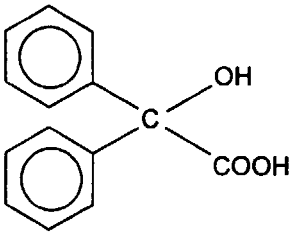 ,

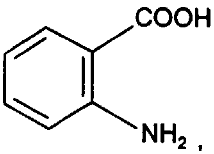 , 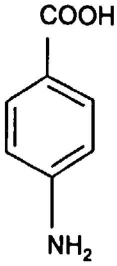 , 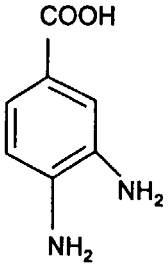 , 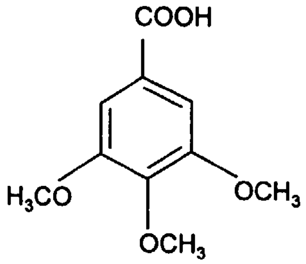 ,

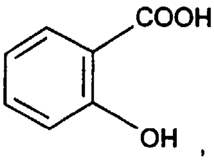 , 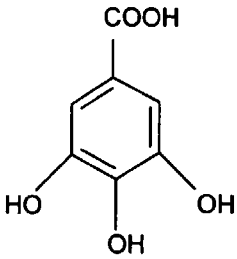 , 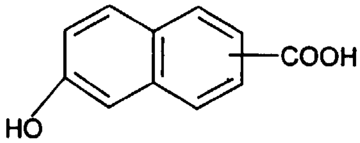 ,

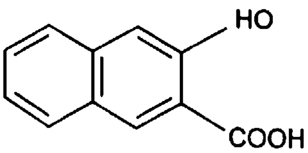 , 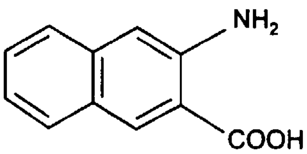 , 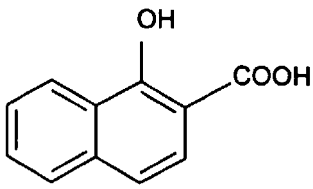 ,

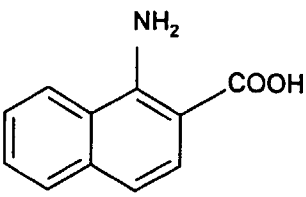 , 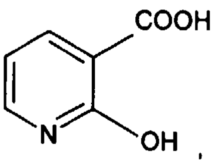 , 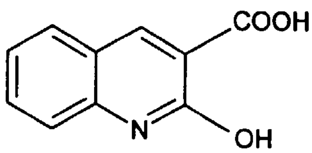

Besonders bevorzugte Metall-Carboxylate und -Sulfonate im Sinne der vorliegenden Erfindung sind Verbindungen der Formel (1) worin

$A^{10}$ 4-tert.-Butylbenzoat, Poly(ethylensulfonat), Poly(styrolsulfonat), Poly(methacrylat), Diphenyldisulfid-2,2'-dicarboxylat,
$A^{20}$ 4-tert.-Butylbenzoat, Diphenyldisulfid-2,2'-dicarboxylat, Salicylat und $M^{2+}$ $Zn^{2+}$ ist,
oder eine Verbindung der Formel (2), worin
$A^{10}$ und $A^{20}$ wie vorstehend definiert
$A^{30}$ OH, Poly(methacrylat), Poly(styrolsulfonat), Poly(ethylensulfonat), Salicylat oder Diphenyldisulfid-2,2'-dicarboxylat und
$M^{3+}$ $Al^{3+}$ ist.

Die Molmasse der polyanionenbildenden Verbindungen der Gruppe c) kann in weiten Grenzen schwanken, beispielsweise von $M_w$ = 1000 g/mol bis $M_w$ = 100 000 000 g/mol.

Die carboxyl- und/oder sulfogruppenhaltigen Polyester der Gruppe d) sind beispielsweise in der EP-A2-0 644 463 beschrieben, insbesondere dort in den Herstellungsbeispielen unter 1.1.

Die erfindungsgemäß verwendeten Metall-Carboxylate und -Sulfonate können genau auf das jeweilige Harz/Toner-System abgestimmt werden. Hinzu kommt, daß die erfindungsgemäß eingesetzten Verbindungen rieselfähig sind und hohe und besonders konstante Ladungssteuereigenschaften, gute Thermostabilitäten und gute Dispergierbarkeiten besitzen. Ein weiterer technischer Vorteil dieser Verbindungen liegt darin, daß sie sich gegenüber den unterschiedlichen Bindemittelsystemen inert verhalten und somit vielfältig einsetzbar sind, wobei von besonderer Bedeutung ist, daß sie nicht in der Polymermatrix gelöst sind, sondern als kleine, feinstverteilte Festkörper vorliegen.

Dispergierung bedeutet die Verteilung eines Stoffes in einem anderen, im Sinne der Erfindung die Verteilung eines Ladungssteuermittels im Tonerbindemittel, Pulverlackbindemittel oder Elektretmaterial.

Es ist bekannt, daß kristalline Stoffe in ihrer gröbsten Form als Agglomerate vorliegen. Um eine homogene Verteilung im Bindemittel zu erreichen, müssen diese durch den Dispergiervorgang in kleinere Aggregate oder idealerweise in Primärteilchen zerteilt werden. Die Ladungssteuermittel-Partikel, die nach der Dispergierung im Bindemittel vorliegen, sollten kleiner als 1 µm, vorzugsweise kleiner als 0,5 µm, sein, wobei eine enge Teilchengrößen-Verteilung von Vorteil ist.

Für die Teilchengröße, definiert durch den $d_{50}$-Wert, finden sich stoffabhängig optimale Wirkbereiche. So sind beispielsweise grobe Teilchen (~ 1 mm) zum Teil gar nicht oder nur mit einem erheblichen Zeit- und Energieaufwand dispergierbar, während sehr feine Teilchen im Submicron-Bereich ein erhöhtes sicherheitstechnisches Risiko, wie die Möglichkeit der Staubexplosion, bergen.

Die Teilchengröße und Form wird entweder durch die Synthese und/oder Nachbehandlung eingestellt und modifiziert. Häufig wird die geforderte Eigenschaft erst durch gezielte Nachbehandlung wie Mahlung und/oder Trocknung möglich. Hierzu bieten sich verschiedene Mahltechniken an. Vorteilhaft sind beispielsweise Luftstrahlmühlen, Schneidmühlen, Hammermühlen, Perlmühlen sowie Prallmühlen.

Typischerweise handelt es sich bei den in der vorliegenden Erfindung erwähnten Bindemittelsystemen um hydrophobe Materialien. Hohe Wassergehalte des Ladungssteuermittels können entweder einer Benetzung entgegenstehen oder aber eine Dispergierung begünstigen (Flushen). Daher ist der praktikable Feuchtegehalt stoffspezifisch.

Die erfindungsgemäß eingesetzten Verbindungen sind durch folgende chemisch/physikalische Eigenschaften gekennzeichnet:
Der Wassergehalt, nach der Karl-Fischer Methode bestimmt, liegt zwischen 0,01 % und 30 %, bevorzugt zwischen 0,05 und 25 % und besonders bevorzugt zwischen 0,05 und 20 %, wobei das Wasser adsorbiert und/oder gebunden sein kann, und sich dessen Anteil durch Temperatureinwirkung bis 200°C und Vakuum bis $10^{-8}$ Torr oder durch Wasserzugabe einstellen läßt.

Die Teilchengröße, mittels lichtmikroskopischer Auswertung oder Laserlichtbeugung bestimmt und definiert durch den $d_{50}$-Wert, liegt zwischen 0,01 µm und 1000 µm, bevorzugt zwischen 0,1 und 500 µm und ganz besonders bevorzugt zwischen 0,2 und 400 µm.

Besonders vorteilhaft ist es, wenn durch die Mahlung eine enge Teilchengrößenfraktion resultiert. Bevorzugt ist ein Bereich $\Delta$ ($d_{95}$-$d_{50}$) von kleiner als 500 µm, insbesondere kleiner als 200 µm.

Die erfindungsgemäß eingesetzten Metall-Carboxylate und -Sulfonate können auch mit weiteren positiv oder negativ steuernden Ladungssteuermitteln kombiniert werden, um gute anwendungstechnische Aufladbarkeiten zu erzielen, wobei die Gesamt-Konzentration dieser Ladungssteuermittel zwischen 0,01 und 50 Gew.-%, bevorzugt zwischen 0,1 und 5 Gew.-% liegt, bezogen auf das Gesamtgewicht des elektrophotographischen Toners, Entwicklers, Pulvers oder Pulverlacks.

Als weitere Ladungssteuermittel kommen beispielsweise in Betracht:

Triphenylmethane; Ammonium- und Immoniumverbindungen, Iminiumverbindungen; fluorierte Ammonium- und fluorierte Immoniumverbindungen;
biskationische Säureamide; polymere Ammoniumverbindungen; Diallylammoniumverbindungen; Arylsulfid-Derivate, Phenolderivate; Phosphoniumverbindungen und fluorierte Phosphoniumverbindungen; Calix(n)arene, ringförmig verknüpfte Oligosaccharide (Cyclodextrine) und deren Derivate, insbesondere Borester-Derivate, Interpolyelektrolytkomplexe (IPECs);

Polyestersalze; Benzimidazolone; Azine, Thiazine oder Oxazine, die im Colour Index als Pigments, Solvent Dyes, Basic Dyes oder Acid Dyes, oder Metallazokomplexfarbstoffe aufgeführt sind.

Die erfindungsgemäß verwendeten Metall-Carboxylate und -Sulfonate und gegebenenfalls weitere Ladungssteuermittel werden einzeln oder in Kombination miteinander in einer Konzentration von 0,01 bis 50 Gew.-%, vorzugsweise von 0,5 bis 20 Gew.-%, besonders bevorzugt von 0,1 bis 5,0 Gew.-%, bezogen auf die Gesamtmischung, in das Bindemittel des jeweiligen Toners, Entwicklers, Lacks, Pulverlacks, Elektretmaterials oder des elektrostatisch zu trennenden Polymers homogen, beispielsweise durch Extrudieren oder Einkneten, Perlmahlen oder mit Ultraturrax (Schnellrührer) eingearbeitet. Dabei können die erfindungsgemäß eingesetzten Verbindungen als getrocknete und gemahlene Pulver, Dispersionen oder Lösungen, Preßkuchen, Masterbatches, Präparationen, angeteigte Pasten, als auf geeignete Träger, wie z. B. Kieselgel, $TiO_2$, $Al_2O_3$ oder Ruß, aus wäßriger oder nicht-wäßriger Lösung aufgezogene Verbindungen oder mit solchen Trägern vermischt oder in sonstiger Form zugegeben werden. Ebenso können die erfindungsgemäß verwendeten Verbindungen grundsätzlich auch schon bei der Herstellung der jeweiligen Bindemittel zugegeben werden, d. h. im Verlauf von deren Polymerisation, Polyaddition oder Polykondensation.

Gegenstand der vorliegenden Erfindung ist auch ein elektrophotographischer Toner, enthaltend ein übliches Bindemittel, beispielsweise ein Styrol-, Styrolacrylat-, Styrolbutadien-, Acrylat-, Acryl-, Polyester- oder Epoxidharz oder eine Kombination der letzten beiden, und 0,01 bis 50 Gew.-%, vorzugsweise 0,5 bis 20 Gew.-%, besonders bevorzugt 0,1 bis 5 Gew.-%, jeweils bezogen auf das Gesamtgewicht des elektrophotographischen Toners, mindestens eines Metall-Carboxylates oder -Sulfonates, gegebenenfalls in Kombination mit einem oder mehreren der beschriebenen zusätzlichen Ladungssteuermittel.

Der elektrophotographische Toner kann zusätzlich noch 1 bis 10 Gew.-%, vorzugsweise 2 bis 8 Gew.-%, eines Farbmittels enthalten, beispielsweise einen Farbstoff, ein organisches oder anorganisches Buntpigment oder ein Schwarzpigment, wie z.B. Ruß.

Gegenstand der vorliegenden Erfindung ist auch ein Pulverlack, enthaltend ein übliches Bindemittel, beispielsweise ein Urethan-, Acryl-, Polyester- oder Epoxidharz oder eine Kombination davon, und 0,01 bis 50 Gew.-%, vorzugsweise 0,5 bis 20 Gew.-%, besonders bevorzugt 0,1 bis 5 Gew.-%, jeweils bezogen auf das Gesamtgewicht des Pulverlacks mindestens eines Metall-Carboxylates oder -Sulfonates, gegebenenfalls in Kombination mit einem oder mehreren der beschriebenen zusätzlichen Ladungssteuermittel. Der Pulverlack kann zusätzlich noch 1 bis 10 Gew.-%, vorzugsweise 2 bis 8 Gew.-%, eines Farbmittels enthalten, beispielsweise einen Farbstoff, ein organisches oder anorganisches Buntpigment oder ein Schwarzpigment, wie z.B. Ruß.

In den nachfolgenden Beispielen bedeuten Teile Gewichtsteile und Prozent Gewichtsprozent.

Herstellungsbeispiel 1

7.44g 4-tert.-Butylbenzoesäure (0.0413 mol) wurden mit 400 ml deionisiertem Wasser angeschlämmt, mit 24.8 ml einer 10%igen NaOH-Lösung (0.062 mol) versetzt und bei Raumtemperatur gerührt, bis die organische Säure gelöst war. Dann wurde eine Lösung von 6.64 g Aluminiumsulfat-Hydrat (0.0207 mol) in 40 ml deionisiertem Wasser tropfenweise innerhalb von 10 min zugegeben. Es entstand ein weißer feiner Niederschlag. Nach beendeter Aluminiumsulfat-Zugabe wurde der Niederschlag noch 15 min nachgerührt, anschließend abgesaugt, mit deionisiertem Wasser mehrmals gewaschen und schließlich bei 60°C und 100 mbar 24 h getrocknet.

Ausbeute: 7.6 g (92 % der Theorie).

| Elementaranalyse: | | | | |
|---|---|---|---|---|
| Berechnet: | 66.3 % C, | 6.8 % H, | 20.1 % O, | 6.8 % Al |
| Gefunden: | 60.9 % C, | 6.4 % H, | 17.0 % O, | 8.1 % Al |

DTA: keine Zersetzung bis 400°C

Thermische Untersuchung (Kofler-Bank): bis 250°C zeigt die Substanz, 1%ig in einem Styrol-Acrylat-Harz (®Dialec), praktisch keinerlei Verfärbung.

pH-Wert: 5.4 ± 0.8
Leitfähigkeit: 1100 ± 200 µS/cm
$H_2O$-Gehalt (Karl-Fischer-Methode): 1.3 ± 0.3 %
Kapazität (1 kHz): 18.6 pF
ε (1 kHz): 0.075
tanδ (1 kHz): 4.2
Spez. Widerstand: $10^{15}$ Ωcm
Kristallinität: sehr hohe Kristallinität (> 95 %, röntgenographisch); zahlreiche scharfe Reflexionspeaks zwischen 2Theta 5° und 35° (Hauptpeaks: 6.6°, 7.0°, 15.2° sowie 21.4° und 21.7°)
IR: v = 3700 $cm^{-1}$, 3660-3100, 2960, 2900, 2860, 1690, 1600, 1560, 1510, 1430, 1370, 1280, 1200, 1110, 1020, 990, 860, 790, 720.
Teilchengrößenverteilung: $d_{50}$ = 14.5 µm, $d_{95}$ = 48.8 µm.

Herstellungsbeispiel 2

6.48 g 4-tert.-Butylbenzoesäure (0.036 mol) wurden mit 4.68 g Na-Poly-(ethylensulfonat) (0.036 mol) in 400 ml deionisiertem Wasser angeschlämmt und mit 15.4 ml einer 10%igen NaOH-Lösung (0.036 mol) versetzt. Die Mischung wurde solange bei Raumtemperatur gerührt, bis alle Bestandteile gelöst waren. Danach wurde diese Lösung tropfenweise mit einer Lösung aus 10 g Zinkchlorid (0.072 mol) in 50 ml deionisiertem Wasser versetzt. Dabei entstand ein weißer Niederschlag. Dieser wurde 15 min nachgerührt, anschließend über eine Nutsche abgesaugt, mehrmals mit deionisiertem Wasser gewaschen und bei 60°C und 100 mbar 24 h getrocknet.

Ausbeute: 8.0 g (64 % der Theorie).
DTA: endotherme Peaks bei 75°C und 205°C
Kapazität (1 kHz): 529 pF
ε (1 kHz): 25
Spez. Widerstand: < $5x10^6$ Ωcm
$H_2O$-Gehalt: 3.7 %

Herstellungsbeispiel 3

5.02 g Salicylsäure (0.036 mol) wurden zusammen mit 12.96 g Na-Poly-(methacrylat) (0.036 mol) in 400 ml deionisiertem Wasser aufgeschlämmt und anschließend mit 14.4 ml einer 10%igen NaOH-Lösung (0.036 mol) unter Rühren bei Raumtemperatur versetzt. Die entstandene klare Lösung wurde danach tropfenweise mit einer Lösung von 10 g Zinkchlorid (0.072 mol) in 50 ml deionisiertem Wasser versetzt. Es entstand ein weißer Niederschlag. Dieser wurde 15 min nachgerührt, über eine Nutsche abgesaugt, mehrmals mit deionisiertem Wasser gewaschen und anschließend bei 60°C und 100 mbar 24 h getrocknet.

Ausbeute: 6.0 g (58 % der Theorie).
DTA: Schmelzpeak bei 114°C
Kristallinität: praktisch röntgenographisch amorph (ein sehr breiter Peak bei 2Theta = 9.7°)

Herstellungsbeispiel 4

7.44 g Diphenyldisulfid-2,2' -dicarbonsäure (0.0207 mol) wurden zusammen mit 2.89 g Salicylsäure (0.0207 mol) in 400 ml deionisiertem Wasser aufgeschlämmt und mit 26.8 ml 10%iger NaOH-Lösung (0.062 mol) unter Rühren bei Raumtemperatur versetzt. Nachdem sich die beiden Komponenten der Suspension gelöst hatten, wurde eine Lösung aus 20 g Aluminiumsulfat-Hydrat (0.062 mol) in 80 ml deionisiertem Wasser tropfenweise innerhalb von 10 min zugegeben. Es entstand ein leicht bräunlicher, feiner Niederschlag. Dieser wurde 15 min nachgerührt, mehrmals mit deionisiertem Wasser gewaschen, über eine Nutsche abgesaugt und schließlich bei 60°C und 100 mbar 24 h getrocknet.

Ausbeute: 9.1g (94 % der Theorie).

Weitere Herstellungsbeispiele, die analog zu den oben beschriebenen Beispielen 1 bis 4 synthetisiert wurden, sind in der folgenden Tabelle 1 wiedergegeben.

Tabelle 1

| Bsp. Nr. | Metall-Salz | Anion A1 | Anion A2 | Anion A3 |
|---|---|---|---|---|
| 5 | $[Al_2(SO_4)_3]$ | Na-PMAA | 4-t-Butylbenzoesäure | Na-PMAA |
| 6 | $[Al_2(SO_4)_3]$ | Na-PES | 4-t-Butylbenzoesäure | Na-PES |
| 7 | $[Al_2(SO_4)_3]$ | Na-P[SSA-co-MA] | 4-t-Butylbenzoesäure | Na-P[SSA-co-MA] |
| 8 | $[Al_2(SO_4)_3]$ | 4-t-Butylbenzoesäure | 4-t-Butylbenzoesäure | Na-PMAA |
| 9 | $[Al_2(SO_4)_3]$ | 4-t-Butylbenzoesäure | 4-t-Butylbenzoesäure | Na-PSSA |
| 10 | $[Al_2(SO_4)_3]$ | 4-t-Butylbenzoesäure | 4-t-Butylbenzoesäure | Na-PES |
| 11 | $[Al_2(SO_4)_3]$ | 4-t-Butylbenzoesäure | 4-t-Butylbenzoesäure | Na-P[SSA-CO-MA 1:1] |
| 12 | $[Al_2(SO_4)_3]$ | 1m Na-PMAA | 4-t-Butylbenzoesäure | 1m NeOH |
| 13 | $[Al_2(SO_4)_3]$ | Na-PSSA | 4-t-Butylbenzoesäure | NaOH |
| 14 | $[ZnCl_2]$ | Na-PMAA | 4-t-Butylbenzoesäure | - |
| 15 | $[ZnCl_2]$ | Na-PSSA | 4-t-Butylbenzoesäure | - |
| 16 | $[ZnCl_2]$ | Na-P[SSA-co-MA 1:1] | 4-t-Butylbenzoesäure | - |
| 17 | $[ZnCl_2]$ | Na-PSSA | Salicylsäure | - |
| 18 | $[ZnCl_2]$ | Na-PES | Salicylsäure | - |
| 19 | $[ZnCl_2]$ | Na-PMAA | ½ Diphenyl-disulfid-dibenzoesäure | - |
| 20 | $[ZnCl_2]$ | Na-PSSA | ½ Diphenyl-disulfid-dibenzoesäure | - |
| 21 | $[ZnCl_2]$ | Na-PES | ½ Diphenyl-disulfid-dibenzoesäure | - |
| 22 | $[ZnCl_2]$ | Na-P[SSA-co-MA 1:1] | ½ Diphenyl-disulfid-dibenzoesäure | |
| 23 | $[Al_2(SO_4)_3]$ | ½ Diphenyl-disulfid-dibenzoesäure | ½ Diphenyl-disulfid-dibenzoesäure | 4-t-Butyl-benzoe-säure |
| 24 | $[Al_2(SO_4)_3]$ | ½ Diphenyl-disulfid-dibenzoesäure | Salicylsäure | Salicylsäure |
| 25 | $[Al_2(SO_4)_3]$ | 4-t-Butylbenzoesäure | ½ Diphenyl-disulfid-dibenzoesäure | 4-t-Butyl-benzoe-säure |
| 26 | $[Al_2(SO_4)_3]$ | ½ Diphenyl-disulfid-dibenzoesäure | ½ Diphenyl-disulfid-dibenzoesäure | NaOH |
| 27 | $[Al_2(SO_4)_3]$ | 4-t-Butylbenzoesäure | ½ Diphenyl-disulfid-dibenzoesäure | NaOH |
| 28 | $[Al_2(SO_4)_3]$ | ½ Diphenyl-disulfid-dibenzoesäure | Salicylsäure | NaOH |
| 29 | $[ZnCl_2]$ | 4-t-Butylbenzoesäure | ½ Diphenyl-disulfid-dibenzoesäure | - |
| 30 | $[ZnCl_2]$ | ½ Diphenyl-disulfid-dibenzoesäure | Salicylsäure | - |
| 31 | $[ZnCl_2]$ | ionischer Polyester | 4-t-Butylbenzoesäure | - |

Tabelle 1 (fortgesetzt)

| Bsp. Nr. | Metall-Salz | Anion A1 | Anion A2 | Anion A3 |
|---|---|---|---|---|
| 32 | [$ZnCl_2$] | ionischer Polyester | Salicylsäure | - |

Na-PMAA = Natrium-Polymethacrylsäure
Na-PSSA = Natrium-Polystyrolsulfonsäure
Na-PES = Natrium-Polyethylensulfonsäure
Na-P[SSA-co-MA 1:1] = Natrium-Poly(styrolsulfonsäure-co-maleinsäure 1:1)
Ionischer Polyester = besteht aus Dimethyl-5-sulfoisophthalsäure, Terephthalsäure, Isophthalsäure und Neopentylglykol, Propylenglykol und Ethylenglykol.

Charakterisierung der Verbindung aus Herstellungabeispiel 14:

| Elementaranalyse: | | | | |
|---|---|---|---|---|
| Berechnet: | 55.0 % C, | 5.5 % H, | 19.5 % O, | 20.0 % Zn |
| Gefunden: | 47.6 % C, | 5.5 % H, | 23.5 % O, | 21.0 % Zn |

Kapazität (1 kHz): 263 pF
ε (1 kHz): 2.12
Spez. Widerstand: $7x10^7$ Ωcm
$H_2O$-Gehalt: 8.0 %

Charakterisierung der Verbindung aus Herstellungsbeispiel 17:

Kristallinität: 70 % Kristallinität (Röntgenuntersuchung); zahlreiche scharfe Reflexionspeaks zwischen 2Theta 5° und 35° (Hauptpeaks: 7.6°, 9.7°, 14.9°, 15.5° sowie 26.0° und 30.0°)
$H_2O$-Gehalt: 5.6 %

Anwendungsbeispiele

In den folgenden Anwendungsbeispielen kommen folgende Tonerbindemittel und Carrier zum Einsatz:

Tonerbindemittel:

Harz 1: Styrol-Methacrylat-Copolymer 60:40
Harz 2: Polyester auf Bisphenol-Basis (®Almacryl-Harz)

Carrier:

Carrier 1: Mit Styrol-Methacrylat-Copolymer beschichtete Magnetit-Teilchen der Größe 50 bis 200 µm (Schüttdichte 2,62 $g/cm^3$) (FBM 100A; Fa. Powder Techn.)
Carrier 2: Mit Silikon beschichtete Ferrit-Teilchen der Größe 50 bis 100 µm (Schüttdichte 2,75 $g/cm^3$) (FMB 96-110; Fa. Powder Techn.)

Anwendungsbeispiel 1

1 Teil der Verbindung der Formel

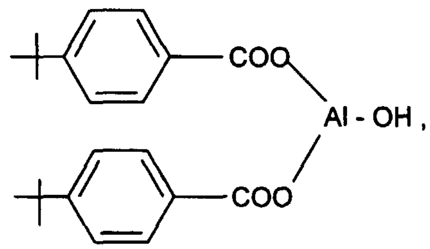

wird mittels eines Kneters innerhalb von 45 Minuten in 99 Teile eines Tonerbindemittels (Styrol-Methacrylat-Copolymer 60:40, Harz 1, ®Dialec S 309) homogen eingearbeitet. Anschließend wird auf einer Labor-Universalmühle gemahlen und dann auf einem Zentrifugalsichter klassifiziert. Die gewünschte Teilchenfraktion (4 bis 25 µm) wird mit einem Carrier (Carrier 1) aktiviert.

Anwendungsbeispiele 2 bis 33

1 Teil des jeweiligen Metall-Carboxylates oder -Sulfonates wird mittels eines Kneters, wie in Anwendungsbeispiel 1 beschrieben, in das jeweilige Harz eingearbeitet.

Elektrostatische Prüfung:

Die Messung erfolgt an einem üblichen q/m-Meßstand. Durch Verwendung eines Siebes mit einer Maschenweite von 50 µm wird sichergestellt, daß bei den Tonerausblasungen kein Carrier mitgerissen wird. Die Messungen erfolgen bei 50 % relativer Luftfeuchte. In Abhängigkeit von der Aktivierdauer werden die q/m-Werte [µC/g] gemessen. Die q/m-Werte der Anwendungsbeispiele 2 bis 33 sind in Tabelle 2 angegeben. Die Mengen an jeweiligem Metall-Carboxylat oder - Sulfonat betragen jeweils 1 Gew.-%. q/m-Werte für Anwendungsbeispiel 1:

| Aktivierdauer [min] | Aufladung q/m [µC/g] |
|---|---|
| 5 | -15.8 |
| 10 | -23.5 |
| 30 | -37.0 |
| 120 | -53.3 |
| 24 Std. | -68.6 |

Tabelle 2

| Verbindung aus Herstell. Bsp. Nr. | Harz | Carrier | q/m [µC/g] nach Aktivierzeit | | | |
|---|---|---|---|---|---|---|
| | | | 5 min | 10 min | 30 min | 120 min |
| 2 | 1 | 1 | -13.4 | -16.2 | -21.7 | -28.8 |
| 3 | 1 | 1 | -17.0 | -16.6 | -17.9 | -18.0 |
| 4 | 1 | 1 | -12.7 | -14.8 | -17.8 | -20.1 |
| 5 | 1 | 1 | -4.6 | -6.5 | -11.8 | -23.3 |
| 6 | 1 | 1 | -4.5 | -6.1 | -10.1 | -17.6 |

Tabelle 2 (fortgesetzt)

| Verbindung aus Herstell. Bsp. Nr. | Harz | Carrier | q/m [µC/g] nach Aktivierzeit | | | |
|---|---|---|---|---|---|---|
| | | | 5 min | 10 min | 30 min | 120 min |
| 7 | 1 | 1 | -4.3 | -5.5 | -9.3 | -16.1 |
| 8 | 1 | 1 | -5.3 | -8.3 | -14.9 | -27.5 |
| 9 | 1 | 1 | -6.1 | -6.3 | -9.1 | -11.9 |
| 10 | 1 | 1 | -7.5 | -8.7 | -13.9 | -21.6 |
| 11 | 1 | 1 | -5.5 | -6.4 | -9,4 | -15.4 |
| 12 | 1 | 1 | -6.1 | -6.5 | -11.0 | -19.4 |
| 13 | 1 | 1 | -5.1 | -5.9 | -9.0 | -12.3 |
| 14 | 1 | 1 | -10.3 | -13.9 | -19.9 | -25.3 |
| 15 | 1 | 1 | -9.3 | -10.5 | -17.2 | -27.1 |
| 16 | 1 | 1 | -6.9 | -10.2 | -15.0 | -22.9 |
| 17 | 1 | 1 | -10.0 | -9.2 | -9.4 | -10.7 |
| 18 | 1 | 1 | -8.6 | -7.0 | -6.9 | -8.5 |
| 19 | 1 | 1 | -10.7 | -13.5 | -17.8 | -20.7 |
| 20 | 1 | 1 | -4.0 | -6.0 | -8.2 | -11.2 |
| 21 | 1 | 1 | -4.0 | -5.7 | -7.9 | -12.0 |
| 22 | 1 | 1 | -6.8 | -11.1 | -15.4 | -19.0 |
| 23 | 1 | 1 | -6.1 | -7.0 | -10.9 | -17.2 |
| 24 | 1 | 1 | -5.9 | -6.7 | -10.1 | -15.7 |
| 25 | 1 | 1 | -5.2 | -6.8 | -11.4 | -22.2 |
| 26 | 1 | 1 | -4.0 | -6.0 | -9.5 | -15.3 |
| 27 | 1 | 1 | -5.3 | -6.7 | -10.9 | -19.3 |
| 28 | 1 | 1 | -5.1 | -7.0 | -11.5 | -18.4 |
| 29 | 1 | 1 | -8.9 | -13.2 | -18.1 | -23.3 |
| 30 | 1 | 1 | -4.8 | -6.0 | -8.7 | -12.0 |
| 31 | 1 | 1 | -4.4 | -5.6 | -8.5 | -14.8 |
| 32 | 2 | 2 | -16.3 | -14.7 | -13.4 | -11.8 |
| 14 | 2 | 2 | -22.0 | -20.6 | -22.6 | -24.5 |

Anwendungsbeispiel 34:

Es wird wie in Anwendungsbeispiel 1 verfahren, wobei zu dem einen Teil der Verbindung aus Anwendungsbeispiel 1 noch ein Teil C.I. Solvent Blue 125 (siehe Vergleichsbeispiel 1) eingearbeitet werden. In Abhängigkeit von der Aktivierdauer werden folgende q/m-Werte gemessen:

| Aktivierdauer [min] | Aufladung q/m [µC/g] |
|---|---|
| 5 | -11.3 |
| 10 | -14.9 |

(fortgesetzt)

| Aktivierdauer [min] | Aufladung q/m [µC/g] |
|---|---|
| 30 | -21.7 |
| 120 | -26.6 |

Der hohe positive triboelektrische Eigeneffekt von C.I. Solvent Blue 125 (siehe Vergleichsbeispiel 1) kann durch Zugabe von 1 Teil der Verbindung aus Anwendungsbeispiel 1 deutlich nach negativ umgepolt werden.

Anwendungsbeispiel 35:

Es wird wie in Anwendungsbeispiel 1 verfahren, wobei zu dem einen Teil der Verbindung aus Anwendungsbeispiel 1 noch 5 Teile Ruß (®Mogul L, Cabot, siehe Vergleichsbeispiel 2) eingearbeitet werden. In Abhängigkeit von der Aktivierdauer werden folgende q/m-Werte gemessen:

| Aktivierdauer [min] | Aufladung q/m [µC/g] |
|---|---|
| 5 | -13.0 |
| 10 | -14.6 |
| 30 | -14.9 |
| 120 | -20.0 |
| 24 Std. | -30.7 |

Anwendungsbeispiel 36:

Es wird wie in Anwendungsbeispiel 1 verfahren, wobei anstelle von 1 Teil lediglich 0,5 Teile der Verbindung aus Anwendungsbeispiel 1 eingesetzt werden. In Abhängigkeit von der Aktivierdauer werden folgende q/m-Werte gemessen:

| Aktivierdauer [min] | Aufladung q/m [µC/g] |
|---|---|
| 5 | -8.5 |
| 10 | -15.7 |
| 30 | -27.3 |
| 120 | -44.3 |
| 24 Std. | -63.7 |

Anwendungsbeispiel 37:

Es wird wie in Anwendungsbeispiel 1 verfahren, wobei anstelle von 1 Teil 2 Teile der Verbindung aus Anwendungsbeispiel 1 eingesetzt werden. In Abhängigkeit von der Aktivierdauer werden folgende q/m-Werte gemessen:

| Aktivierdauer [min] | Aufladung q/m [µC/g] |
|---|---|
| 5 | -19.3 |
| 10 | -27.7 |

(fortgesetzt)

| Aktivierdauer [min] | Aufladung q/m [µC/g] |
|---|---|
| 30 | -45.0 |
| 120 | -55.3 |
| 24 Std. | -75.5 |

Anwendungsbeispiel 38:

1 Teil der Verbindung aus dem Anwendungsbeispiel 1 wurde in 99 Teile eines Pulverlackbindemittels (®Crylcoat 430) homogen eingearbeitet, wie bei den oben erwähnten Anwendungsbeispielen beschrieben. Die Triboversprühung der Pulver(lacke) wurde mit einem Sprühgerät, beispielsweise ®TriboStar der Firma Intec (Dortmund), mit einem Normsprührohr und einer Sterninnenstange bei maximalem Pulverdurchsatz mit einem Sprühdruck von 3 und 5 bar durchgeführt. Der zu besprühende Gegenstand wurde hierzu in einer Spritzkabine aufgehängt und aus ca. 20 cm Abstand direkt von vorne ohne weitere Bewegung des Sprühgerätes besprüht. Die jeweilige Aufladung des versprühten Pulvers wurde anschließend mit einem "Meßgerät zur Messung von triboelektrischer Ladung von Pulvern" der Firma Intec (Dortmund) gemessen. Zur Messung wurde die Meßantenne des Meßgerätes direkt in die aus dem Sprühgerät austretende Pulverwolke gehalten. Die aus der elektrostatischen Ladung von Pulverlack oder Pulver sich ergebende Stromstärke wurde in µA angezeigt. Die Abscheidequote wurde anschließend in % durch eine Differenzwiegung aus versprühtem und abgeschiedenem Pulverlack bestimmt.

| Druck [bar] | Strom [µA] | Abscheidequote [%] |
|---|---|---|
| 3 | 0.3-0.5 | 50 |
| 5 | 1.2-1.7 | 48 |

Anwendungsbeispiel 39

Es wird die Verbindung aus Anwendungsbeispiel 1 wie in Anwendungsbeispiel 1 behandelt, wobei jedoch die Probe für die anschließende q/m-Messung anstelle bei üblicher relativer Luftfeuchte (zwischen 35 und 65 % rel. Luftfeuchte) bei einer in einem Klimaschrank (Fa. Espec) eingestellten relativen Luftfeuchte von 10 % (25°C) 24 h gelagert wird.
In Abhängigkeit von der Aktivierdauer werden hierbei folgende q/m-Werte gemessen:

| Aktivierdauer [min] | Aufladung q/m [µC/g] |
|---|---|
| 5 | -9.5 |
| 10 | -15.0 |
| 30 | -25.3 |
| 120 | -45.4 |

Es ist zu erkennen, daß der relativ starke negative triboelektrische Effekt der Verbindung aus Anwendungsbeispiel 1 erhalten bleibt.

Anwendungsbeispiel 40

Es wird wie in Anwendungsbeispiel 39 verfahren, wobei die Probe bei einer relativen Luftfeuchte von 90 % (25°C) 24 h in dem Klimaschrank gelagert wird. In Abhängigkeit von der Aktivierdauer werden hierbei folgende q/m-Werte gemessen:

| Aktivierdauer [min] | Aufladung q/m [µC/g] |
|---|---|
| 5 | -9.5 |
| 10 | -10.8 |
| 30 | -13.7 |
| 120 | -19.1 |

Auch hier bleibt der deutliche negative triboelektrische Effekt der Verbindung erhalten.

Vergleichsbeispiel 1:

Es wird wie in Anwendungsbeispiel 1 verfahren, wobei anstelle von 1 Teil der Verbindung aus Anwendungsbeispiel 1 nunmehr 1 Teil C.I. Solvent Blue 125 eingearbeitet wird. In Abhängigkeit von der Aktivierdauer werden folgende q/m-Werte gemessen:

| Aktivierdauer [min] | Aufladung q/m [µC/g] |
|---|---|
| 5 | -0.1 |
| 10 | +0.4 |
| 30 | +2.7 |
| 120 | +10.4 |
| 24 Std. | +29.3 |

Der ausgeprägte positive triboelektrische Eigeneffekt des blauen Farbmittels ist deutlich erkennbar.

Vergleichsbeispiel 2:

Es wird wie in Anwendungsbeispiel 1 verfahren, wobei anstelle von 1 Teil der Verbindung aus Anwendungsbeispiel 1 nunmehr 5 Teile Ruß (®Mogul L, Cabot) eingearbeitet werden. In Abhängigkeit von der Aktivierdauer werden folgende q/m-Werte gemessen:

| Aktivierdauer [min] | Aufladung q/m [µC/g] |
|---|---|
| 5 | -14.5 |
| 10 | -15.2 |
| 30 | -14.5 |
| 120 | -7.3 |
| 24Std. | +3.4 |

Es zeigt sich, daß der eingesetzte Ruß die negative Aufladung deutlich in positive Richtung verschiebt.

**Patentansprüche**

1. Verwendung von Metall-Carboxylaten und Metall-Sulfonaten als Ladungssteuermittel in elektrophotographischen Tonern und Entwicklern, als Aufladungsverbesserer in Pulverlacken, Elektretmaterialien und in elektrostatischen

Trennverfahren, wobei die Metall-Carboxylate und -Sulfonate durch Umsetzung einer Säure $A^1$ und einer Säure $A^2$ in wäßrigem alkalischem Medium, oder eines Alkalisalzes der Säure $A^1$ und der Säure $A^2$, mit einem wasserlöslichen Metall-Salz hergestellt werden, dadurch gekennzeichnet, daß $A^1$

a) eine Säure der Formeln (I) bis (VIII)

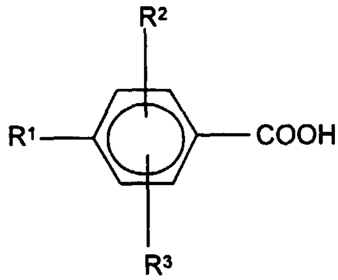

(I)

worin

$R^1$ ein linearer oder verzweigter Alkylrest mit 1 bis 18 C-Atomen,
$R^2$ und $R^3$ gleich oder verschieden sind und Wasserstoff, $C_1$-$C_8$-Alkyl, ($C_1$-$C_{18}$)-Hydroxyalkylen, $C_6$-$C_{10}$-Aryl, Heteroaryl, wobei Aryl und Heteroaryl durch
1 bis 3 der Reste Carboxyl, Hydroxy, $C_1$-$C_4$-Alkoxy, $C_1$-$C_4$-Alkyl, $C_1$-$C_4$-Acyl, Halogen, Hydroxy-($C_1$-$C_4$)-alkyl oder Amino substituiert sein können, Nitro, Cyano, Fluor, Chlor, Brom oder $C_1$-$C_4$-Acyl;

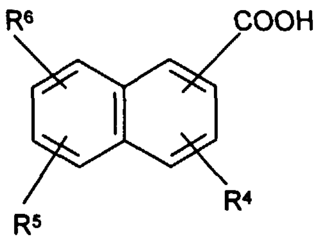

(II)

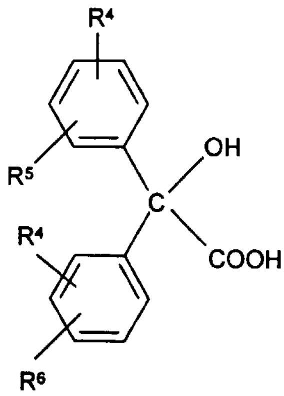

(III)

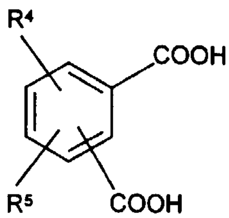

(IV)

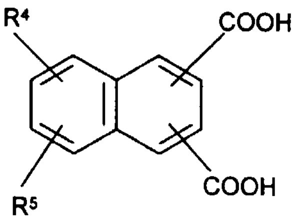

(V)

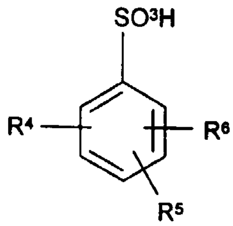

(VI)

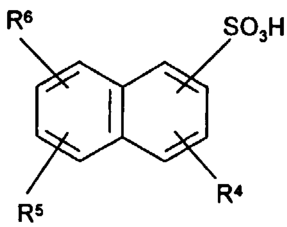

(VII)

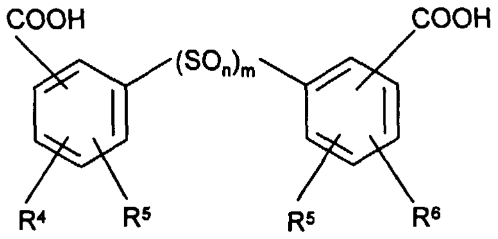

(VIII)

worin

$R^4$, $R^5$ und $R^6$ gleich oder verschieden sind und Wasserstoff, $C_1$-$C_8$-Alkyl, ($C_1$-$C_{18}$)-Hydroxyalkylen, $C_6$-$C_{10}$-Aryl, Heteroaryl, wobei Aryl und Heteroaryl durch 1 bis 3 der Reste Carboxyl, Hydroxy, $C_1$-$C_4$-Alkoxy, $C_1$-$C_4$-Alkyl, Halogen, Hydroxy-($C_1$-$C_4$)-alkyl oder Amino substituiert sein können, Nitro, Cyano, Fluor, Chlor, Brom oder $C_1$-$C_4$-Acyl;
m die Zahl 1, 2 oder 3, und
n die Zahl 0, 1 oder 2 ist;

b) eine heteroaromatische Mono- oder Dicarbonsäure;
c) eine Polyanionen bildende Verbindung aus der Gruppe Poly(styrolsulfonsäure), Poly(acrylsäure), Poly(methacrylsäure), Poly(maleinsäure), Poly(anetholsulfonsäure), Poly(itaconsäure), Poly(vinylsulfat), Poly(vinylsulfonsäure), Poly(acrylsäure-co-maleinsäure), Poly(styrolsulfonsäure-co-maleinsäure), Poly(ethylen-co-acrylsäure), Hectorit, Bentonit, Alginsäure, Pektinsäure, kappa-, lambda-, iota-Carrageenane, Xanthan, Gummi arabicum, Dextransulfat, Carboxymethyldextran, Carboxymethyl-cellulose, Cellulosesulfat, Stärkesulfat, Lignosulfonate, Gummi Karaya; Polygalakturonsäure, Polyglucuronsäure, Polyguluronsäure, Polymannuronsäure und Mischpolymere hiervon, Chondroitin-Sulfat, Heparin, Heparansulfat, Hyaluronsäure, Dermatansulfat, Keratansulfat; Stärke-, Amylose-, Amylopektin-, Cellulose-, Guaran-, Gummi arabicum-, Gummi Karaya-, Gummi Guar-, Pullulan-, Xanthan-, Dextran-, Curdlan-, Gellan-, Carubin-, Agarose-, Chitin-, Chitosan-Derivate mit folgenden funktionellen Gruppen:

Carboxymethyl-, Carboxyethyl-, Carboxypropyl-, 2-Carboxyvinyl-, 2-Hydroxy-3-carboxypropyl-, 1,3-Dicarboxy-isopropyl-, Sulfomethyl-, 2-Sulfoethyl-, 3-Sulfopropyl-, 4-Sulfobutyl-, 5-Sulfopentyl-, 2-Hydroxy-3-sulfopropyl-, 2,2-Disulfoethyl-, 2-Carboxy-2-sulfo-ethyl-, Maleat-, Succinat-, Phthalat-, Glutarat-, aromatische und aliphatische Dicarboxylate-, Xanthogenat-, Sulfat-, Phosphat-, 2,3-Dicarboxy-, N,N-Di-(phosphatomethyl)-aminoethyl-, N-Alkyl-N-phosphatomethyl-aminoethyl, wobei diese Derivate auch Methyl-, Ethyl-, Propyl-, Isopropyl-, 2-Hydroxyethyl-, 2-Hydroxypropyl-, 2-Hydroxybutyl-Gruppen sowie Estergruppen mit aliphatischen Carbonsäuren ($C_2$ bis $C_{18}$), enthalten können;

sowie der Formel (X)

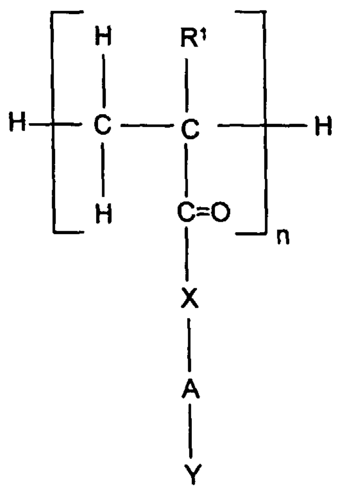

(X)

wobei n = 5 bis $5x10^5$; und $R^1$, X, A und Y jeweils gleiche oder verschiedene der nachstehend genannten Bedeutungen haben:

$R^1$ = H oder $CH_3$;
X = O oder NH;
A = verzweigte oder lineare ($C_1$-$C_{18}$)-Alkylene oder Arylene;
Y = $SO_3$, COO, $N^{\oplus}R^3{}_2$-A-COO, $N^{\oplus}R^3{}_2$-A-$SO_3{}^{\ominus}$, $N^{\oplus}R^3{}_2$-A-PO(OH)$O^{\ominus}$ mit $R^3$ = $C_1$-$C_8$-Alkyl;

sowie Copolymere, bestehend aus Monomeren der vorstehend genannten Verbindungen und einem oder mehreren der nachfolgenden Monomere in unterschiedlicher Zusammensetzung: Acrylsäure, Methacrylsäure, Acrylsäurealkyl-($C_1$-$C_{18}$)-ester, Methacrylsäurealkyl($C_1$-$C_{18}$)ester, Methacrylsäureglycidylester, Acrylsäureamid, Acrylnitril, Methacrylnitril, Ethylen, Styrol, α-Methylstyrol, Styrolsulfonsäure, Butadien, Buten, Isopren, Vinylchlorid, Propylen, Maleinsäureanhydrid, Maleinsäure, Maleinsäuremonoalkyl($C_1$-$C_{18}$)- oder -dialkyl-($C_1$-$C_{18}$)ester, Alkyl($C_1$-$C_{18}$)-vinylether, Vinylalkohol, Vinylacetat, Vinylbutyral, Vinylimidazol, N-Vinyl-2-caprolactam, N-Vinylpyrrolidon, mono- oder dialkyliertes ($C_1$-$C_{30}$)-N-Vinylpyrrolidon, Vinylsulfonsäure, Diallyldimethylammoniumchlorid, Vinylidenchlorid, Poly-(ethylenglykol)-methacrylat, Poly(ethylenglykol)-acrylat;
d) ein carboxyl- und/oder sulfogruppenhaltiger Polyester;

$A^2$ eine Säure der Formeln (I) bis (VIII); eine Säure der Formel (IX)

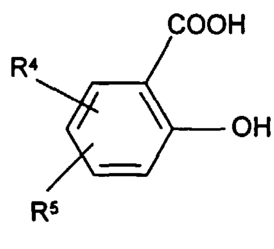

(IX)

worin $R^4$ und $R^5$ die vorstehend genannten Bedeutungen haben; oder eine heteroaromatische Mono- oder Dicarbonsäure;

oder durch Umsetzung einer Säure $A^1$ der in c) oder d) genannten Bedeutung mit einer Säure $A^2$ in der Bedeutung der Formeln (I) bis (IX) hergestellt werden, worin $R^1$ bis $R^6$ die vorstehend genannten Bedeutungen und zusätzlich die Bedeutung

($C_1$-$C_{18}$)-Alkoxy, Hydroxy, Amino, ($C_1$-$C_{18}$)Alkylamino, Di($C_1$-$C_{18}$)Alkylamino, ($C_1$-$C_{18}$)Alkylen-$NR^7R^8$, worin $R^7$ und $R^8$ Wasserstoff oder $C_1$-$C_8$-Alkyl bedeuten, haben;

und das dem Metall zugrundeliegende Kation zweiwertig oder dreiwertig ist.

**2.** Verwendung nach Anspruch 1, dadurch gekennzeichnet, daß das Metall-Carboxylat oder Metall-Sulfonat eine Verbindung der Formel (1), (2) oder (2a) ist,

$$A^{10} - M^2 - A^{20} \quad (1)$$

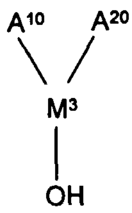

(2)

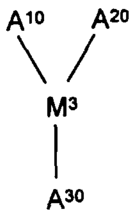

(2a)

worin

$A^{10}$ ein Säurerest der in Anspruch 1 definierten Säure $A^1$;
$A^{20}$ ein Säurerest der in Anspruch 1 definierten Säure $A^2$;
$A^{30}$ die Bedeutung $A^{10}$ oder $A^{20}$;
$M^2$ ein zweiwertiges Metallkation und
$M^3$ ein dreiwertiges Metallkation ist.

**3.** Verwendung nach Anspruch 1 oder 2, dadurch gekennzeichnet, daß $M^{2+}$ die Bedeutung $Fe^{2+}$, $Zn^{2+}$,$Co^{2+}$, $Ni^{2+}$, $Mn^{2+}$, $Cu^{2+}$, $Mg^{2+}$, $Ca^{2+}$, $Sr^{2+}$ oder $Ba^{2+}$ hat.

**4.** Verwendung nach Anspruch 1 oder 2, dadurch gekennzeichnet, daß $M^{3+}$ die Bedeutung $Al^{3+}$, $Fe^{3+}$, $Mn^{3+}$ oder $Co^{3+}$ hat.

**5.** Verwendung nach mindestens einem der Ansprüche 1 bis 4, dadurch gekennzeichnet, daß

$A^1$ eine Verbindung der Formel

a)

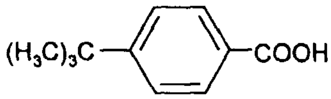 , 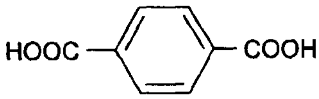 , 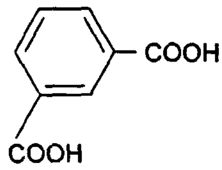 ,

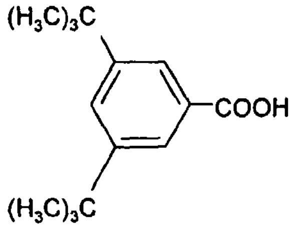 , 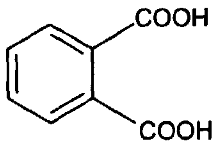 , 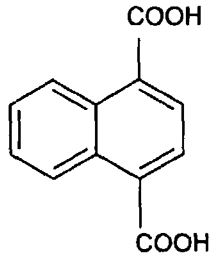 ,

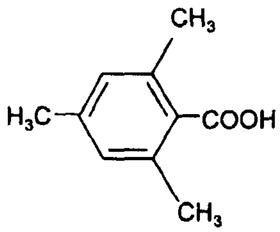 , 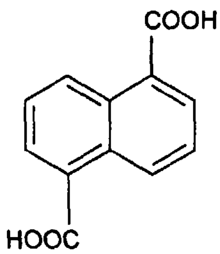 , 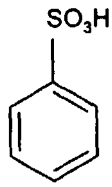 , 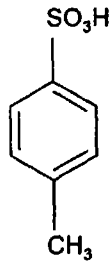 ,

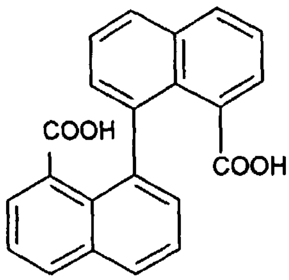 , 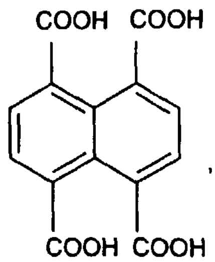 , 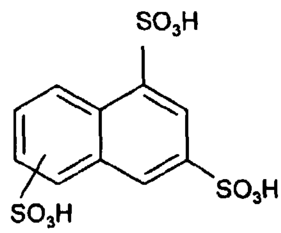 ,

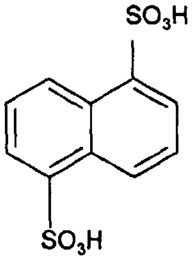 , 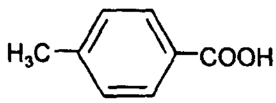 , 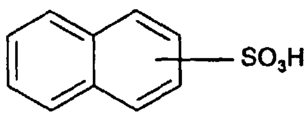 ,

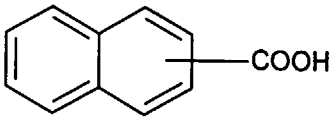,

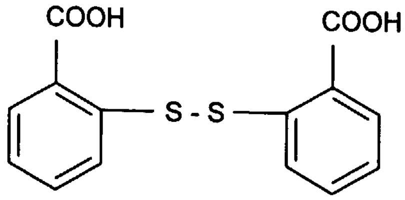,

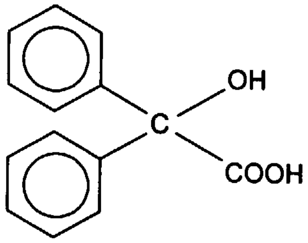,

b)

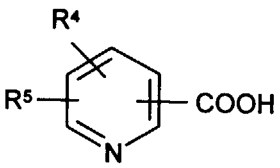,

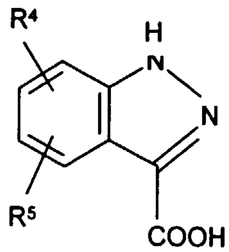,

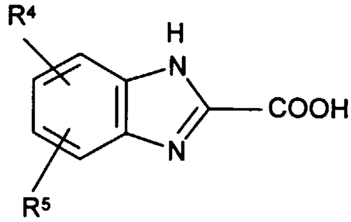,

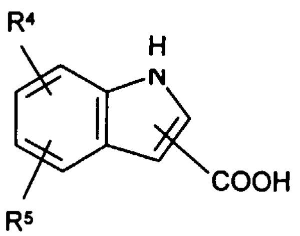,

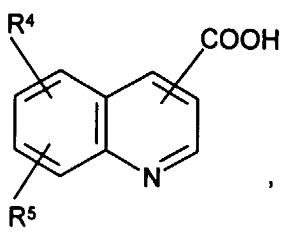,

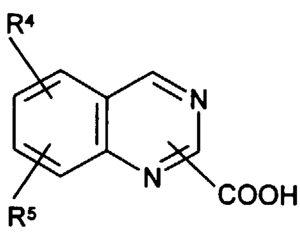,

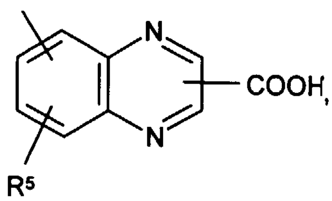,

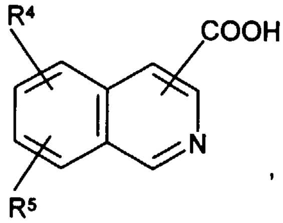,

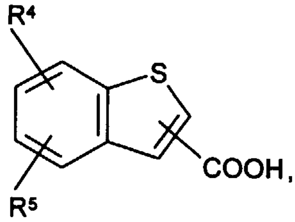,

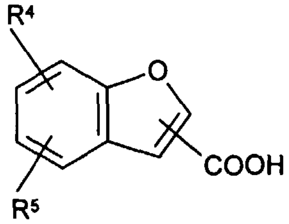 , 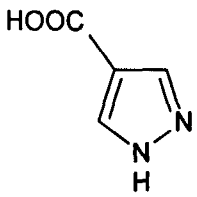 , 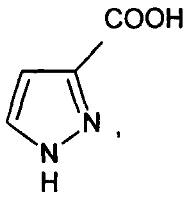 , 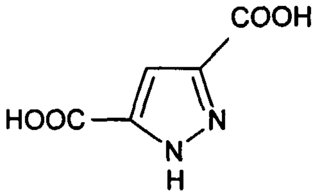

c) Poly(methacrylsäure), Poly(styrolsulfonsäure), Poly(ethylensulfonsäure), Poly-(styrolsulfonsäure-co-maleinsäure 1:1),

d) Polyester, der aus dem Reaktionsprodukt der einzelnen Komponenten i), ii) und iii) sowie gegebenenfalls iv) und gegebenenfalls v) besteht, wobei

i) eine Dicarbonsäure oder ein reaktives Derivat einer Dicarbonsäure, welche frei von Sulfogruppen sind,
ii) eine difunktionelle aromatische, aliphatische oder cycloaliphatische Sulfoverbindung, deren funktionelle Gruppen Hydroxyl oder Carboxyl, oder Hydroxyl und Carboxyl, sind,
iii) ein aliphatisches, cycloaliphatisches oder aromatisches Diol, ein Polyetherdiol oder ein Polycarbonatdiol,
iv) eine polyfunktionelle Verbindung (Funktionalität > 2), deren funktionelle Gruppen Hydroxyl oder Carboxyl, oder Hydroxyl und Carboxyl, sind und
v) eine Monocarbonsäure oder ein sulfogruppenhaltiger Monoalkohol ist.

**6.** Verwendung nach mindestens einem der Ansprüche 1 bis 5, dadurch gekennzeichnet, daß

$A^2$ eine Verbindung der Formel

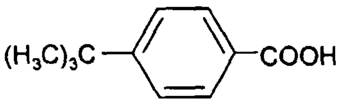 , 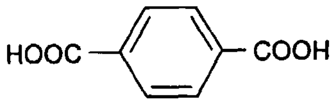 , 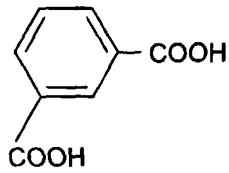 ,

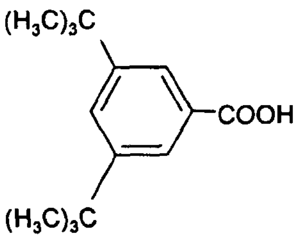 , 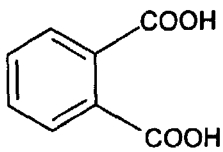 , 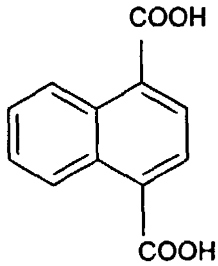 ,

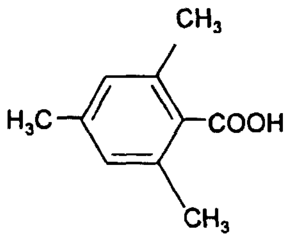 , 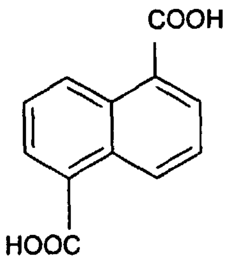 , 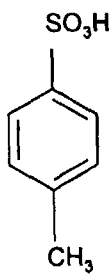 , 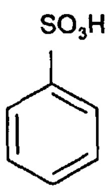 ,

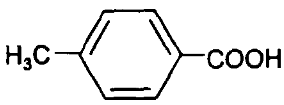 , 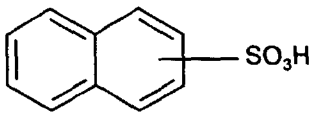 , 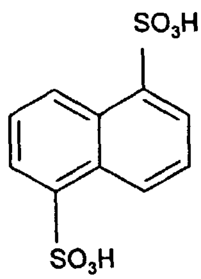 ,

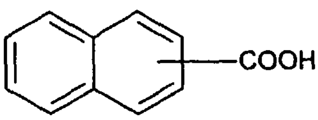 , 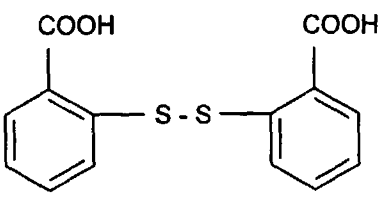 ,

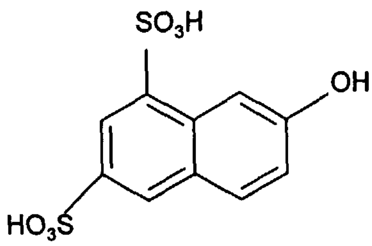 , 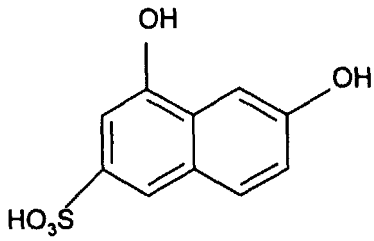 ,

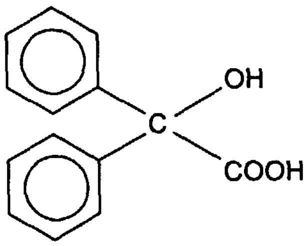 ,

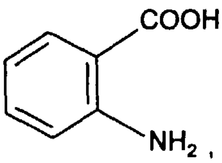 , 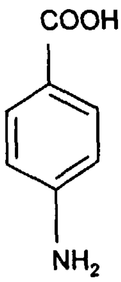 , 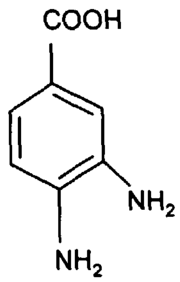 , 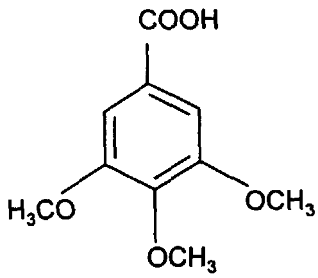 ,

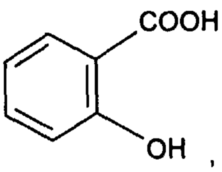 , 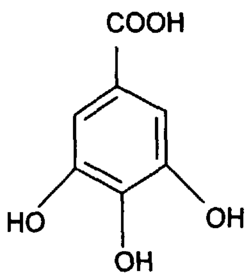 , 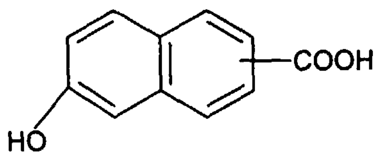 ,

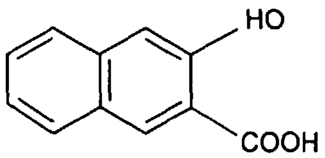, 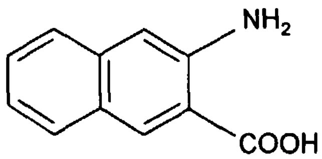, 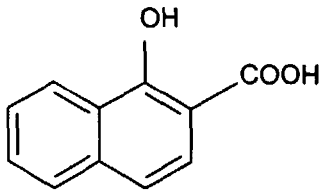,

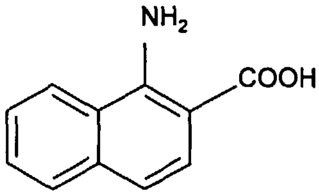, 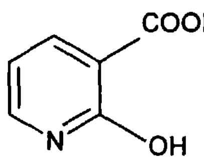, 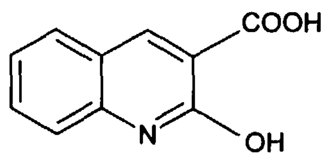

ist.

**7.** Verwendung nach mindestens einem der Ansprüche 2 bis 6, dadurch gekennzeichnet, daß das Metall-Carboxylat oder -Sulfonat eine Verbindung der Formel (1) oder (2a), worin

$A^{10}$ 4-tert.-Butylbenzoat, Poly(ethylensulfonat), Poly(methacrylat), Diphenyldisulfid-2,2'-dicarboxylat oder Poly(styrolsulfonat);
$A^{20}$ 4-tert.-Butylbenzoat, Diphenyldisulfid-2,2'-dicarboxylat oder Salicylat;
$M^{2+}$ $Zn^{2+}$ und $M^{3+}Al^{3+}$ ist.

**8.** Verwendung nach mindestens einem der Ansprüche 1 bis 7, dadurch gekennzeichnet, daß das Metall-Carboxylat oder -Sulfonat in Kombination mit einem weiteren Ladungssteuermittel aus der Gruppe der Triphenylmethane, Ammonium- und Immoniumverbindungen, Iminiumverbindungen; fluorierte Ammonium- und fluorierte Immoniumverbindungen; biskationische Säureamide; polymere Ammoniumverbindungen; Diallylammoniumverbindungen; Arylsulfid-Derivate, Phenolderivate; Phosphoniumverbindungen und fluorierte Phosphoniumverbindungen; Calix(n)arene, ringförmig verknüpfte Oligosaccharide (Cyclodextrine) und deren Derivate, insbesondere Borester-Derivate, Interpolyelektrolytkomplexe; Polyestersalze; Benzimidazolone; Azine, Thiazine, Oxazine oder Metallazokomplexfarbstoffe eingesetzt wird.

**9.** Verwendung nach mindestens einem der Ansprüche 1 bis 8, dadurch gekennzeichnet, daß die Gesamtkonzentration an Metall-Carboxylat und - Sulfonat und gegebenenfalls zugesetzten weiteren Ladungesteuermitteln 0,01 bis 50 Gew.-%, vorzugsweise 0,1 bis 5 Gew.-%, bezogen auf die Gesamtmischung des elektrophotographischen Toners, Entwicklers, Pulverlacks oder Elektretmaterials ist.

**10.** Elektrophotographische Toner, enthaltend ein Metall-Carboxylat und -Sulfonat gemäß einem oder mehreren der Ansprüche 1 bis 7 und gegebenenfalls ein oder mehrere positiv oder negativ steuernde Ladungssteuermittel nach Anspruch 8 in einer Gesamtkonzentration von 0,01 bis 50 Gew.-%, vorzugsweise 0,5 bis 20 Gew.-%, bezogen auf das Gesamtgewicht des Toners, sowie ein übliches Tonerbindemittel.

**11.** Elektrophotographischer Toner nach Anspruch 10, zusätzlich enthaltend 1 bis 10 Gew.-% Farbmittel, vorzugsweise 2 bis 8 Gew.-% Farbmittel, bezogen auf das Gesamtgewicht des elektrophotographischen Toners.

**12.** Pulverlack, enthaltend ein Metall-Carboxylat und -Sulfonat gemäß einem oder mehreren der Ansprüche 1 bis 7 und gegebenenfalls ein oder mehrere positiv oder negativ steuernde Ladungssteuermittel nach Anspruch 8 in einer Gesamtkonzentration von 0,01 bis 50 Gew.-%, vorzugsweise 0,5 bis 20 Gew.-%, bezogen auf das Gesamtgewicht des Pulverlacks, sowie ein übliches Pulverlackbindemittel.

**13.** Pulverlack nach Anspruch 12, zusätzlich enthaltend 1 bis 10 Gew.-% Farbmittel, vorzugsweise 2 bis 8 Gew.-% Farbmittel, bezogen auf das Gesamtgewicht des Pulverlacks.